# EUROPEAN PATENT SPECIFICATION

(11) **EP 4 111 162 B1**
(45) Date of publication and mention of the grant of the patent: **18.11.2026**
(21) Application number: 21705273.7
(22) Date of filing: 10.02.2021
(51) Int. Cl.: G01N 1/38, G01N 1/40, G01N 9/00, G01N 33/24

(54) **AGRICULTURAL SAMPLING SYSTEM AND RELATED METHODS**
LANDWIRTSCHAFTLICHES PROBENAHMESYSTEM UND ZUGEHÖRIGE VERFAHREN
SYSTÈME D'ÉCHANTILLONNAGE AGRICOLE ET PROCÉDÉS ASSOCIÉS

(30) Priority: 28.02.2020 US 202062983237 P
(43) Date of publication of application: 04.01.2023
(73) Proprietor: Precision Planting LLC, Tremont, IL 61568 (US)
(72) Inventor: SWANSON, Todd, TREMONT, Illinois 61568 (US); HARMAN, Reid, TREMONT, Illinois 61568 (US); LEVY, Kent, TREMONT, Illinois 61568 (US); KOCH, Dale, TREMONT, Illinois 61568 (US); VACCARI, Adam, TREMONT, Illinois 61568 (US); SEELYE, Josh, TREMONT, Illinois 61568 (US)
(74) Representative: AGCO Intellectual Property Department
(86) International application number: PCT/IB2021/051077
(87) International publication number: WO 2021/171121

(56) References cited:
- GB-A- 1 422 830
- JP-A- H01 235 816
- US-A- 5 505 854
- US-A1- 2019 137 376
- US-B2- 9 662 613

## Description

### CROSS-REFERENCE TO RELATED APPLICATIONS

The present application is related to International Application No. PCT/IB2019/055862 filed July 10, 2019, U.S. Provisional Patent Application No. 62/696,271 filed July 10, 2018, U.S. Provisional Patent Application No. 62/729,623 filed September 11, 2018, U.S. Provisional Patent Application No. 62/745,606 filed October 15, 2018, U.S. Provisional Patent Application No. 62/792,987 filed January 15, 2019, U.S. Provisional Patent Application No. 62/829,807 filed April 5, 2019, U.S. Provisional Patent Application No. 62/860,297 filed June 12, 2019.

### BACKGROUND

The present invention relates generally to agricultural sampling and analysis, and more particularly to a fully automated system for performing soil and other types of agricultural related sampling and chemical property analysis.

Periodic soil testing is an important aspect of the agricultural arts. Test results provide valuable information on the chemical makeup of the soil such as plant-available nutrients and other important properties (e.g. levels of nitrogen, magnesium, phosphorous, potassium, pH, etc.) so that various amendments may be added to the soil to maximize the quality and quantity of crop production.

In some existing soil sampling processes, collected samples are dried, ground, water is added, and then filtered to obtain a soil slurry suitable for analysis. Extractant is added to the slurry to pull out plant available nutrients. The slurry is then filtered to produce a clear solution or supernatant which is mixed with a chemical reagent for further analysis. Prior art disclosure GB 1,422,830 A discloses a sample preparation system for preparing a starch slurry to have a desired density. The density of the slurry is measured using an analogue balance type density meter. The slurry is prepared for an analysis device such as a viscometer.

Improvements in testing soil, vegetation, and manure are desired.

### BRIEF SUMMARY

The present invention provides an agricultural sample analysis system as defined in claim 1 and a method for preparing an agricultural slurry sample as defined in claim 13. The sampling system allows multiple samples to be processed and analyzed for different analytes (e.g. plant-available nutrients) and/or chemical properties (e.g. pH) in a simultaneous concurrent or semi-concurrent manner, and in relatively continuous and rapid succession. Advantageously, the system can process soil samples in the "as collected" condition without the drying and grinding steps previously described.

The present system generally includes a sample preparation sub-system which receives soil samples collected by a probe collection sub-system and produces a slurry (i.e. mixture of soil, vegetation, and/or manure and water) for further processing and chemical analysis, and a chemical analysis sub-system which receives and processes the prepared slurry samples from the sample preparation sub-system for quantification of the analytes and/or chemical properties of the sample. The described chemical analysis sub-system can be used to analyze soil, vegetation, and/or manure samples.

In one embodiment, the sample preparation system generally includes a mixer-filter apparatus which mixes the collected raw soil sample in the "as sampled" condition (e.g. undried and unground) with water to form a sample slurry. The mixer-filter apparatus then filters the slurry during its extraction from the apparatus for processing in the chemical analysis sub-system. The chemical analysis sub-system processes the slurry and performs the general functions of extractant and color-changing reagent addition/mixing, centrifugating the slurry sample to yield a clear supernatant, and finally sensing or analysis for detection of the analytes and/or chemical properties such as via colorimetric analysis.

Although the sampling systems (e.g. sample collection, preparation, and processing) may be described herein with respect to processing soil samples which represents one category of use for the disclosed embodiments, it is to be understood that the same systems including the apparatuses and related processes may further be used for processing other types of agricultural related samples including without limitation vegetation/plant, forage, manure, feed, milk, or other types of samples. The embodiments of the invention disclosed herein should therefore be considered broadly as an agricultural sampling system. Accordingly, the present invention is expressly not limited to use with processing and analyzing soil samples alone for chemical properties of interest.

### BRIEF DESCRIPTION OF THE DRAWINGS

The present invention will become more fully understood from the detailed description and the accompanying drawings, wherein like elements are labeled similarly and in which:
Figures 1 to 302 are found in WO2020/012369A2.
FIG. 303A is a basic schematic diagram of a first embodiment of an agricultural sample analysis system;
FIG. 303B is a basic schematic diagram of a second embodiment of an agricultural sample analysis system including closed flow loop slurry recirculation;
FIG. 304 is a perspective view of a first embodiment of a slurry density meter usable in the systems of FIGS. 303A or 303B;
FIG. 305 is a first side view thereof;
FIG. 306 is a second side view thereof;
FIG. 307 is a first end view thereof;
FIG. 308 is a second end view thereof;
FIG. 309 is top view thereof;
FIG. 310 is a bottom view thereof;
FIG. 311 is a first longitudinal cross sectional view thereof;
FIG. 312 is a second longitudinal cross sectional view thereof;
FIG. 313 is a longitudinal perspective cross sectional view thereof;
FIG. 314 is a first perspective view of a second embodiment of a slurry density meter usable in the systems of FIGS. 303A or 303B;
FIG. 315 is a second perspective view thereof;
FIG. 316 is a third perspective view thereof with control system circumference board detached;
FIG. 317 is a longitudinal cross sectional view thereof;
FIG. 318A shows a portion of the oscillator tube of the density meter illustrating accumulation of iron particles in the slurry on the inside of the tube caused by the magnetic field of a permanent magnet attached to the tube;
FIG. 318B shows a first embodiment of a magnetic isolation member attached to the oscillator tube;
FIG. 318C shows a second embodiment of a magnetic isolation member attached to the oscillator tube;
FIG. 318D shows a third embodiment of a magnetic isolation member attached to the oscillator tube;
FIG. 318E shows a fourth embodiment of a magnetic isolation member attached to the oscillator tube;
FIG. 318F shows possible directional vibrational motions for the oscillator tube;
FIG. 318G shows an oscillator tube mounted in a vertically orientation;
FIG. 319 is a first perspective view of a first embodiment of a fine filter unit;
FIG. 320 is a second perspective view thereof;
FIG. 321 is a bottom view thereof;
FIG. 322 is top view thereof;
FIG. 323 is a side cross sectional view thereof;
FIG. 324 is a first perspective view of a second embodiment of a fine filter unit;
FIG. 325 is a second perspective view thereof;
FIG. 326 is an end view thereof;
FIG. 327 is a top view thereof;
FIG. 328 is side cross sectional view thereof;
FIG. 329 is a schematic diagram of a pump-less system for blending a soil slurry using pressurized air;
FIG. 330 is a first graph showing dilution amount of diluent (e.g. water) added to the slurry versus slurry density;
FIG. 331 is a second graph thereof; and
FIG. 332 is a third graph thereof.

All drawings are not necessarily to scale. Components numbered and appearing in one figure but appearing un-numbered in other figures are the same unless expressly noted otherwise. A reference herein to a whole figure number which appears in multiple figures bearing the same whole number but with different alphabetical suffixes shall be constructed as a general refer to all of those figures unless expressly noted otherwise.

### DETAILED DESCRIPTION

The features and benefits of the invention are illustrated and described herein by reference to exemplary ("example") embodiments. This description of exemplary embodiments is intended to be read in connection with the accompanying drawings, which are to be considered part of the entire written description. Accordingly, the disclosure expressly should not be limited to such exemplary embodiments illustrating some possible non-limiting combination of features that may exist alone or in other combinations of features.

In the description of embodiments disclosed herein, any reference to direction or orientation is merely intended for convenience of description and is not intended in any way to limit the scope of the present invention. Relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

As used throughout, any ranges disclosed herein are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

The description relating to Figures 1 to 302 can be found in WO2020/012369 in paragraphs [0338] to [0742].

### Agricultural Sample Slurry Processing System Modifications

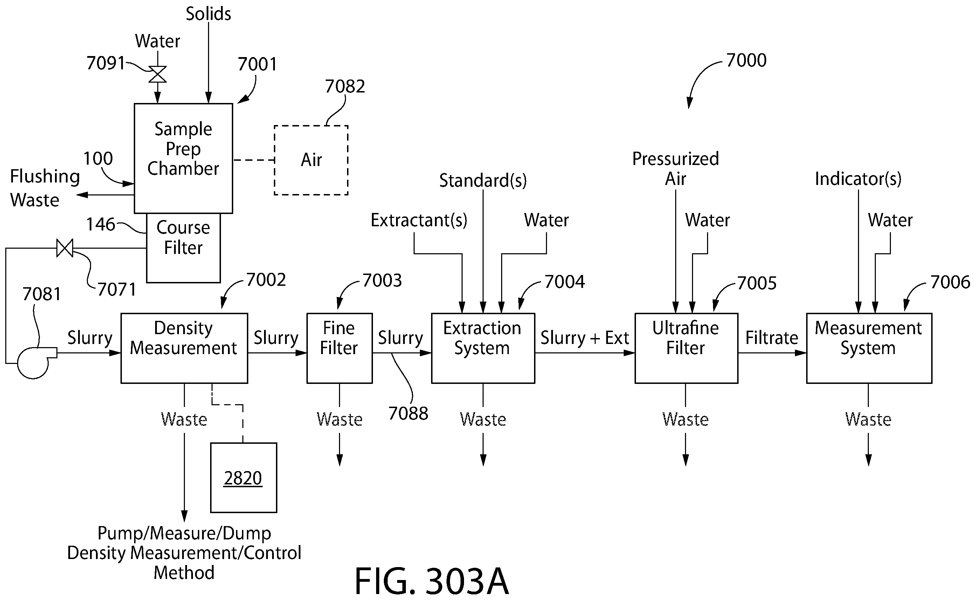

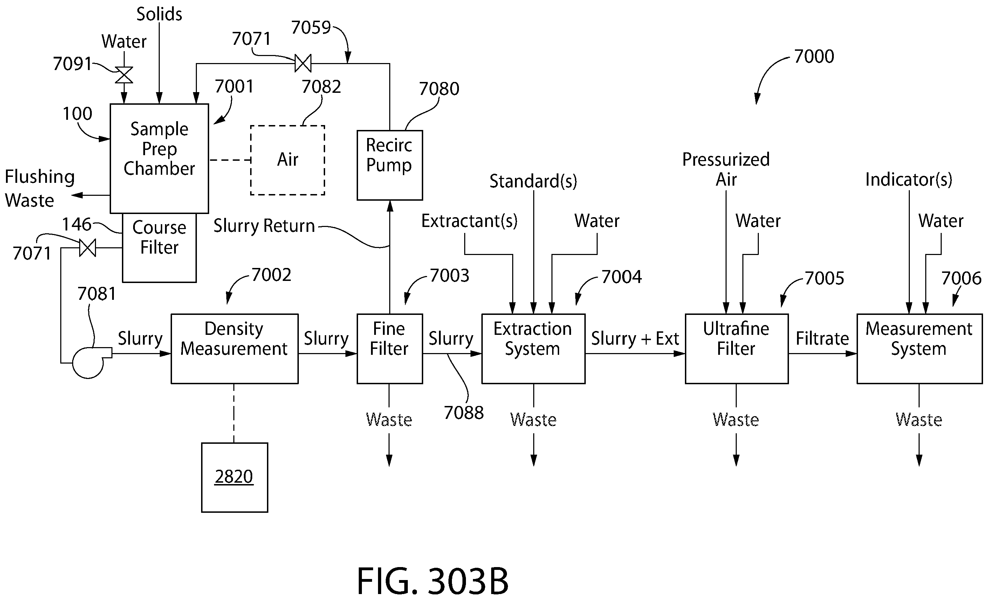

The sections which follow describe various modifications to the foregoing agricultural sample analysis systems and associated devices previously described herein which process and analyze/measure the prepared agricultural sample slurry for analytes of interest (e.g. soil nutrients such as nitrogen, phosphorous, potassium, etc., vegetation, manure, etc.). Specifically, the modifications relate to sample preparation sub-system 3002 and chemical analysis sub-system 3003 portions of soil sampling system 3000 shown in FIG. 1. To provide broad context for discussion of the alternative devices and equipment which follows, FIG. 303A is a high-level schematic system diagram summarizing the agricultural sample analysis system process flow sequence. This embodiment illustrates static slurry batch mode density measurement as further described herein. FIG. 303B is the same, but includes a slurry recirculation loop between the fine filtration station and sample preparation mixing chamber for dynamic continuous mode slurry density measurement.

Referring now to FIGS. 303A and 303B, agricultural sample analysis systems 7000 includes in flow path sequence soil sample preparation sub-system 7001, density measurement sub-system 7002, fine filtration sub-system 7003, analyte extraction sub-system 7004, ultrafine filtration sub-system 7005, and measurement sub-system 7006. Soil sample preparation sub-system 7001 represents the portion of the system where sample slurry is initially prepared. Accordingly, sub-system 7001 may comprise any one of mixer-filter apparatus 100 or 200 previously described herein which includes the mixing chamber (e.g. mixing chamber 102 or mixing cavity 207a respectively) where water is added to the bulk soil sample to prepare the slurry, and a coarse filter (e.g. filter 146 or flow grooves 218 on stopper 210) which removes larger particles (e.g. small stone, rocks, debris, etc.) from the prepared soil slurry. In addition, the coarse filter is sized to pass the desired maximum particle size in the slurry to ensure uniform flow and density of the slurry for weight/density measurement used in the process, as further described herein. The prepared slurry may be transferred from the mixer-filter apparatus to the density measurement sub-system 7002 via pumping by slurry pump 7081, or alternatively via pressurizing the mixer-filter apparatus chamber 102/207a with pressurized air provided by a fluid coupling to a pressurized air source 7082 (shown in dashed lines in FIG. 303A).

The analyte extraction sub-system 7004 and measurement sub-system 7006 may comprise the soil sampling system 3000 shown in FIGS. 1, 79-94, and 261 and previously described herein, or the microfluidic processing disk 4000 arranged in the carousel assembly with analysis processing wedges 4002 shown in FIGS. 96-121 and previously described herein. The ultrafine filtration sub-system 7005 may comprise ultrafine filter 5757 shown in FIGS. 261-262 (associated with soil sampling system 3000) or FIG. 263 (associated with microfluidic processing disk 4000). These systems and associated devices have been already described in detail and will not be repeated here for the sake of brevity.

It bears noting that the order of the devices and equipment shown in FIGS. 303A-B (e.g. pump(s), valves, etc.) can be switched and relocated in the systems without affecting the function of the unit. Moreover, additional devices and equipment such as valving, pumps, other flow devices, sensors (e.g. pressure, temperature, etc.) may be added control fluid/slurry flow and transmit additional operating information to the system controller which may control operation of the systems shown. Accordingly, the systems are not limited to the configuration and devices/equipment shown alone.

### Digital Slurry Density Measurement Devices

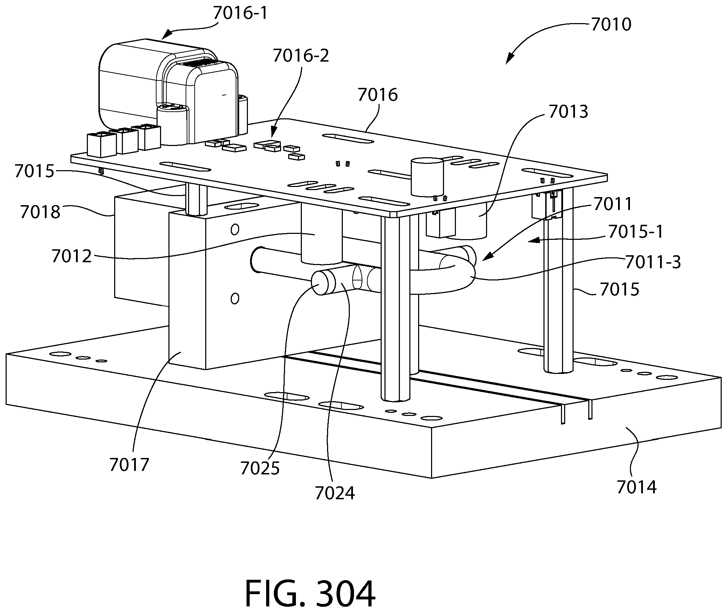

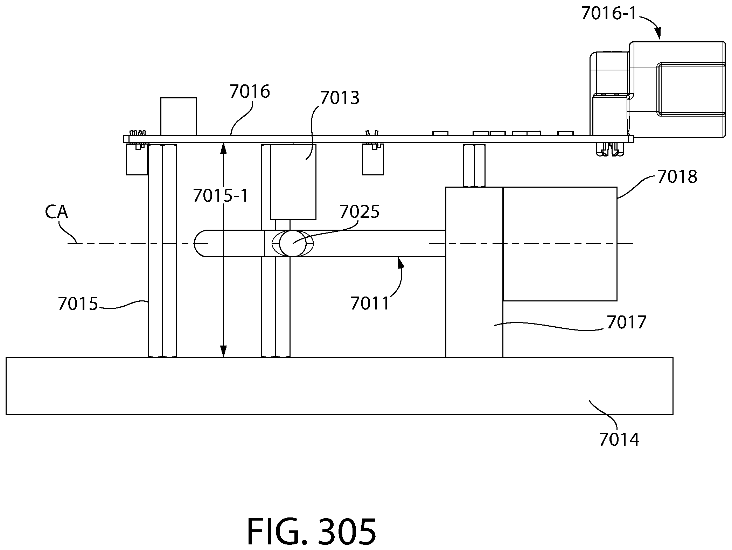

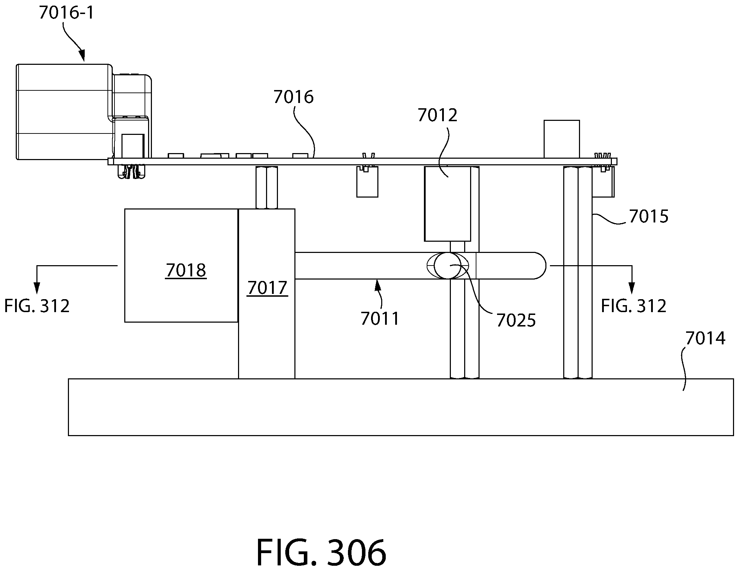

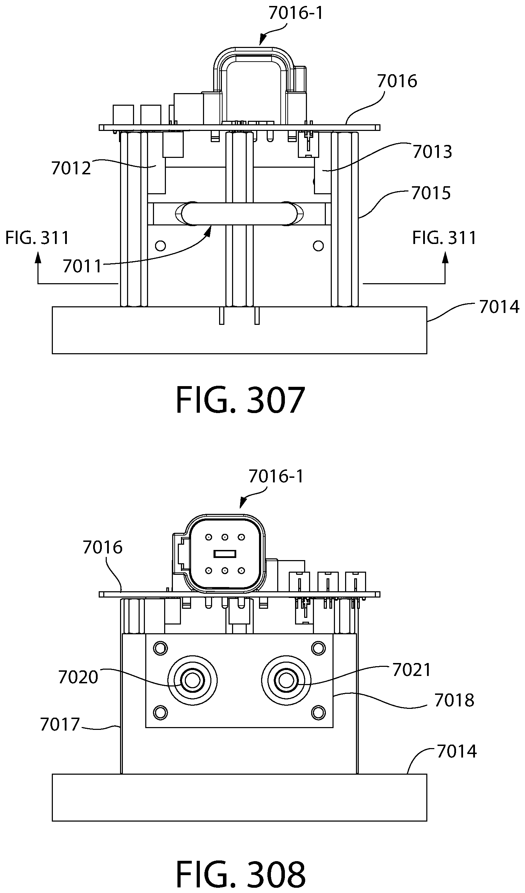

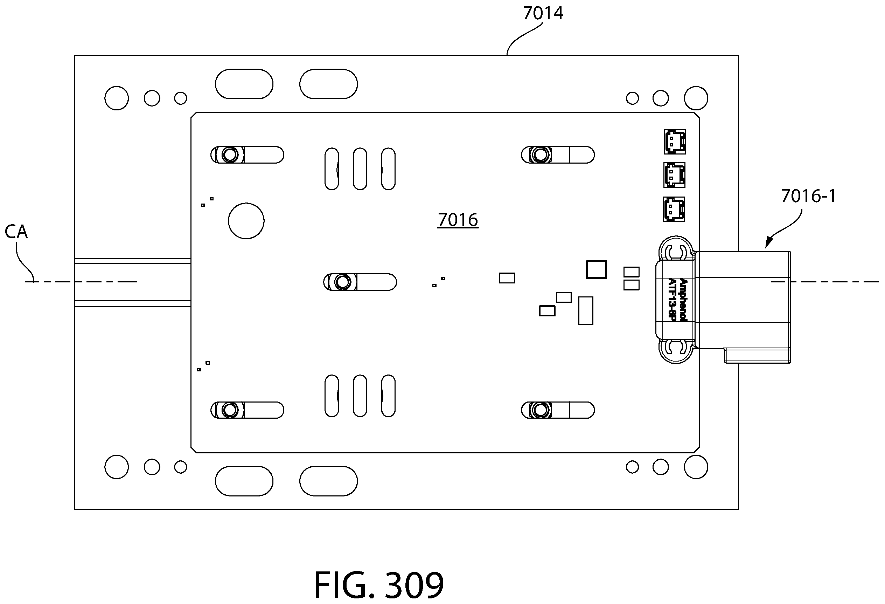

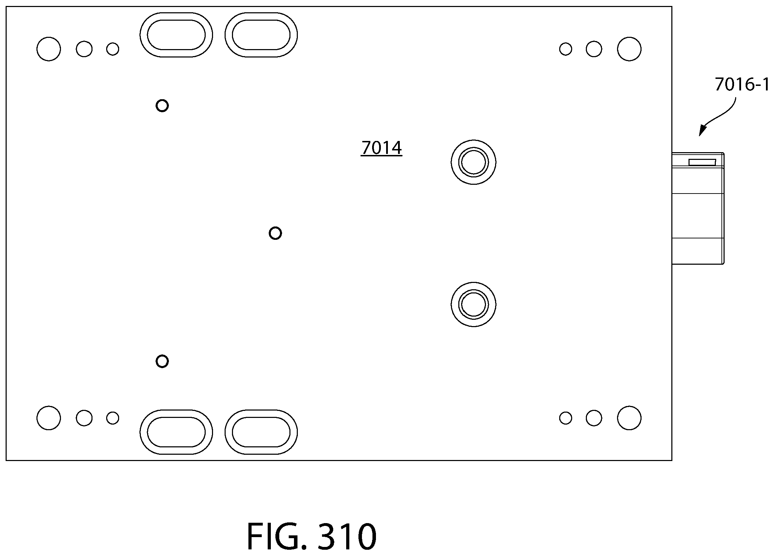

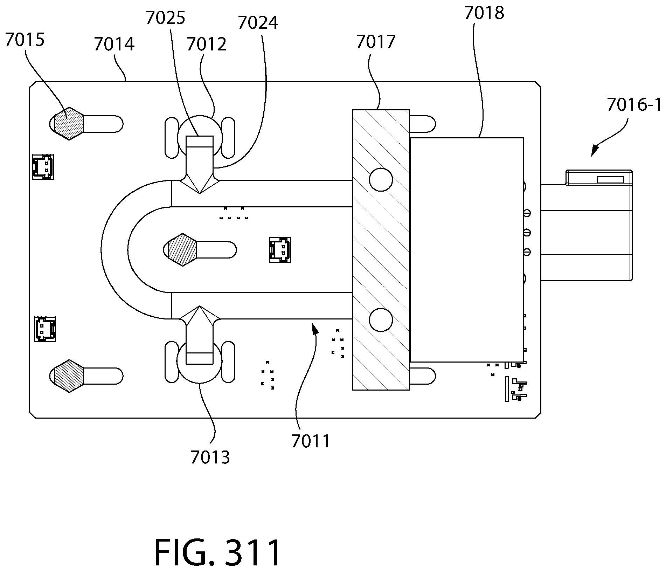

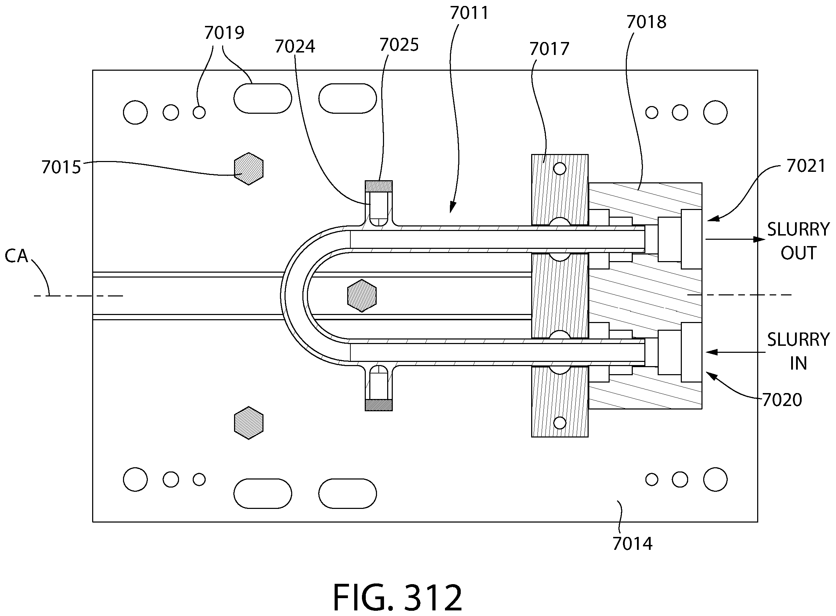

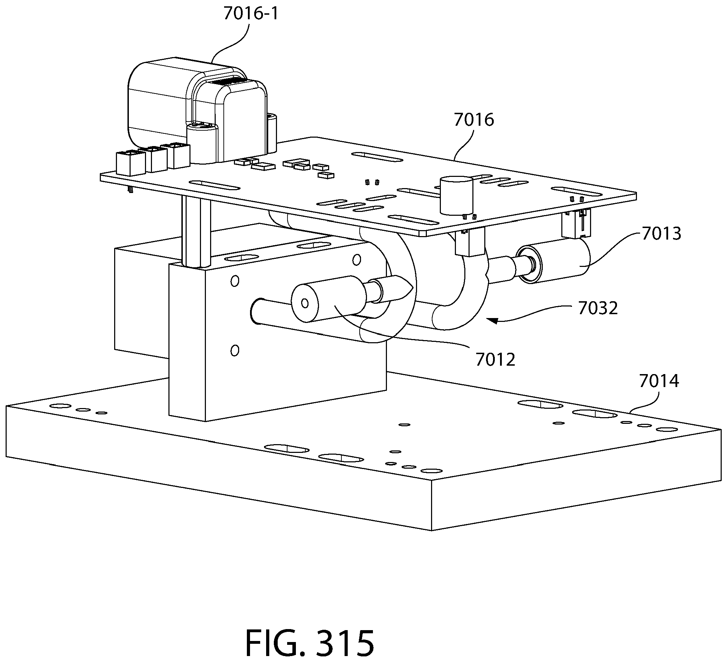

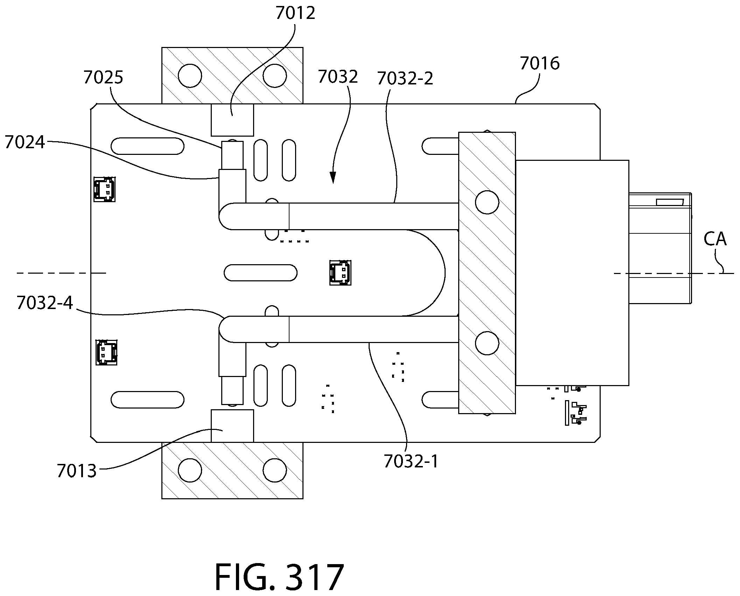

Density measurement sub-system 7002 comprises a digital slurry density measurement device 7010 for obtaining the density of the mixed agricultural sample slurry prepared in sample preparation chamber (e.g. mixer-filter apparatus 100) of FIGS. 303A-B. In one implementation, density measurement device 7010 may be a digital density meter of the U-tube oscillator type shown in FIGS. 304-318 used to measure density of the sample slurry, which may be a soil slurry in one non-limiting example which will be used hereafter for convenience. It should be recognized that any type of agricultural sample slurry however may be processed in the same system including soil, vegetation, manure, or other. The density of the slurry is used to determine the amount of diluent required (e.g. water) to be added to the soil sample in order to achieve the desired water to soil ratio for chemical analysis of an analyte, as further described herein. The U-shaped oscillator tube 7011 is excited via a frequency transmitter or driver 7012 to oscillate the tube at its characteristic natural frequency. In various embodiments, the driver 7012 may be an electromagnetic inductor, a piezoelectric actuator/element, or a mechanical pulse generator all of which are operable to generate a user-controllable and preprogrammed excitation frequency. A corresponding sensor such as a receiver or pickup 7013 is provided which is configured to detect and obtain a vibrational measurement of the oscillator tube when excited. The pickup may be electromagnetic, inductance, piezoelectric receiver/element, optical, or other commercially available sensor capable of detecting and measuring the vibrational frequency response of the oscillator tube 7011 when excited. The pulsing or vibrational response movement of the excited oscillator tube 7011 is detected pickup 7013 which measures the amplitude of the frequency response of the tube, which is highest at a natural/resonance or secondary harmonic frequency when the tube is empty. Alternatively, the phase difference between the driving and driven frequencies may be used to narrow into the natural frequency.

In operation, the vibrational frequency of oscillator tube 7011 when excited changes relative to the density of the slurry either stagnantly filled in the oscillator tube for batch mode density measurement in one embodiment, or flowing through the U-tube at a preferably continuous and constant flow rate for continuous density measurement in another embodiment. The digital density measurement device converts the measured oscillation frequency into a density measurement via a digital controller which is programmed to compare the baseline natural frequency of the empty tube to the slurry filled tube.

The frequency driver and pickup 7012, 7013 are operably and communicably coupled to an electronic control circuit comprising a microprocessor-based density meter processor or controller 7016-2 mounted to a circuit control board 7016 supported from base 7014. Controller 7016-2 is configured to deliver a pulsed excitation frequency to the oscillator tube 7011 via the driver 7012, and measure the resultant change in the resonant frequency and phase of the excited oscillator tube. The digital density measurement device 7010 converts the measured oscillation frequency into a density measurement via the controller which is preprogrammed and configured with operating software or instructions to perform the measurement and density determination. The controller 7016-2 may be provided and configured with all of the usual ancillary devices and appurtenances similar to any of the controllers already previously described herein and necessary to provide a fully functional programmable electronic controller. Accordingly, these details of the density meter controller 7016-2 will not be described in further detail for the sake of brevity.

FIGS. 304-313 show a density measurement device 7010 having an oscillator tube according to a first embodiment. Density measurement device 7010 further includes a base 7014, a plurality of spacers 7015, a tube mounting block 7017, a flow connection manifold 7018, at least one or a pair of permanent magnets 7025, an electronic circuit control board 7016 and an electrical-communication interface unit 7016-1 configured for both electrical power supply for the board and communication interface to system controller 2820. Base 7014 is configured for mounting the density measurement device on a flat horizontal support surface, vertical support surface, or support surface disposed at any angle therebetween. Accordingly, any suitable corresponding mounting orientation of the base may be used as desired. The mounting orientation of the base may be determined by the intended direction of oscillation of the oscillator tube 7011 taking into account the force of gravity on the slurry laden oscillator tube. It is generally advantageous to mount all slurry passages in the oscillator tube in a manner that achieves the highest percent of horizontal passages as possible, so that any settling of particulate occurs perpendicular to the flow passage rather than inline with it. Base 7019 may substantially planar and rectangular in shape in one embodiment as shown; however, other polygonal and non-polygonal shaped bases may be used. The base may optionally include a plurality of mounting holes 7019 to facilitate mounting the base to the support surface with a variety of fasteners (not shown). Base 7019 defines a longitudinal centerline CA of the density measurement device 7010 which is aligned with the length of the oscillator tube 7011 (parallel to the tube's parallel legs as shown). In other words, the length of the oscillator tube extends along the centerline CA. In one embodiment, centerline CA and the flow passages within oscillator tube 7011 may be horizontal as shown so that any settling that occurs is perpendicular to the flow through the passage rather than in-line with the flow. In other embodiments, at least a majority of the flow passages inside the oscillator tube may be horizontal in orientation.

Spacers 7015 may be elongated in structure and space the control board 7016 apart from the base 7014 so that the oscillator tube 7011 may occupy the space 7015-1 created therebetween. Any suitable number of spacers may be used for this purpose. The space is preferably large enough to provide clearance for accommodating the motion of the oscillator tube 7011 and other appurtenances such as the frequency driver and pickup 7012, 7013. The planar control board 7016 may preferably be oriented parallel to the base 7014 as shown.

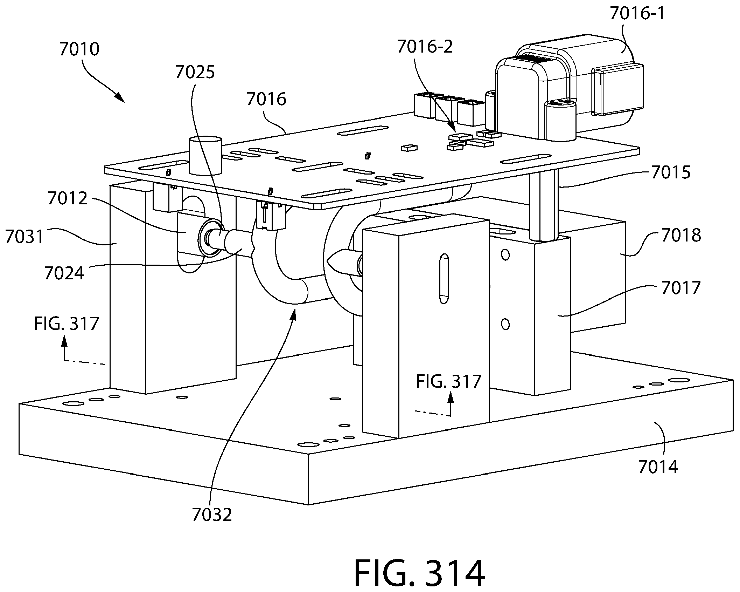

The frequency driver 7012 and pickup 7013 may be rigidly mounted to circuit board 7016 in one embodiment as variously shown in FIGS. 304-313. In other possible embodiments as shown in FIGS. 314-317, the driver and pickup may be rigidly mounted to separate vertical supports 7031 attached to base 7014. In each case, the driver and pickup are mounting adjacent and proximate to permanent magnets 7025, but do not contact the permanent magnets. Permanent magnets 7025 generate a static magnetic field (lines of magnetic flux) which interacts with the driver 7012 and pickup 7013 for exciting the oscillator tube 7011 and measuring its vibrational frequency when excited.

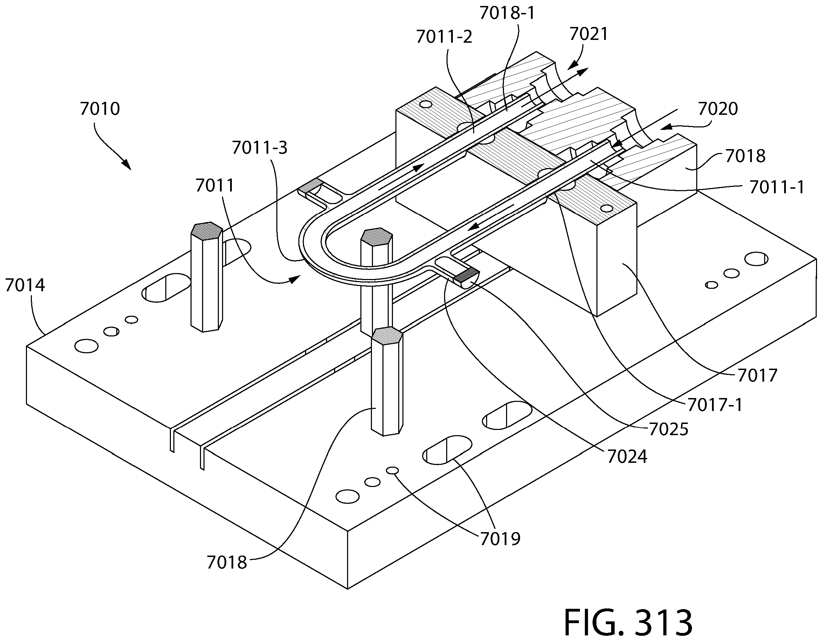

Tube mounting block 7017 is configured for rigidly mounting oscillator tube 7011 thereto in a cantilevered manner. Oscillator tube 7011 may be a straight U-tube configuration in one embodiment as shown in which all portions lie in the same horizontal plane. The straight inlet end portion 7011-1 and straight outlet end portion 7011-2 of oscillator tube 7011 are mounted to and rigidly supported by the block 7017 (see, e.g. FIG. 313) to allow the tube to oscillate analogously to a tuning fork when electronically/electromagnetically excited. The mounting block 7017 includes a pair of through bores 7017-1 which receive the end portions 7011-1, 7011-2 of the oscillator tube complete therethrough. Bores 7017-1 may be parallel in one embodiment. The U-bend portion 7011-3 of the oscillator tube opposite the inlet and outlet end portions and adjoining tube portions between the U-bend and mounting block 7017 are unsupported and able to freely oscillate in response to the excitation frequency delivered by the driver 7012.

The inlet end portion 7011-1 and outlet end portion 7011-2 of oscillator tube 7011 project through and beyond the tube mounting block 7017, and are each received in a corresponding open through bore or hole 7018-1 of the flow connection manifold 7018 associated with defining a slurry inlet 7020 and slurry outlet 7021 of the connection manifold 7018 (see slurry directional flow arrows in FIG. 313). Through holes 7018-1 may have any suitable configuration to hold the end portions 7011-1, 7011-2 of oscillator tube 7011 in tight and a fluidly sealed manner. Suitable fluid seals such as O-rings, elastomeric sealants, or similar may be used to achieve a leak-tight coupling between he oscillator tube and connection manifold 7018. The connection manifold 7018 abuttingly engages the mounting block 7017 to provide contiguous coupling openings therethrough for the inlet end portion 7011-1 and outlet end portion 7011-2 to fully support the end portions of oscillator tube 7011 (see, e.g. FIG. 313). In other possible embodiment contemplated, the connection manifold 7018 may be spaced apart from but preferably in relative close proximity to mounting block 7017.

The mounting block 7017, flow connection manifold 7018, and base 7014 may preferably made of a suitable metal (e.g. aluminum, steel, etc.) of sufficient weight and thickness to act as vibration dampeners such that excitation of oscillator tube which is measured by the density measurement device 7010 is indicative of only the frequency response of the filled oscillator tube 7011 without interference by any corresponding parasitic resonances that otherwise could be induced in the base or the mounting block and flow connection manifold.

In the first oscillator tube embodiment shown in FIGS. 304-313, the oscillator tube 7011 may have a conventional U-shape as shown and previously described herein. The tube may be oriented parallel to the planar top surface of the base 7014. Oscillator tube 7001 may be formed of a non-metallic material in one non-limiting embodiment. Suitable materials include glass such as borosilicate glass. In other possible embodiments, however, metallic tubes may be used. The permanent magnets 7025 are fixedly and rigidly supported from and mounted to the oscillator tube 7011, such as on opposite lateral sides of the U-tube proximate to the U-bend portion 7011-3 as shown. The U-bend portion is farthest from the cantilevered portion of the oscillator tube adjoining the mounting block 7017 and thus experiences the greatest displacement/deflection when excited by driver 7012 making the tube vibration frequency change readily detectible by the digital meter controller 7016-2. This creates the greatest sensitivity for frequency deviation measurement of the slurry-filled oscillator tube 7011 versus the natural frequency of the tube when empty; the deviation or different in frequency being used by controller 7016-2 to measure the slurry density.

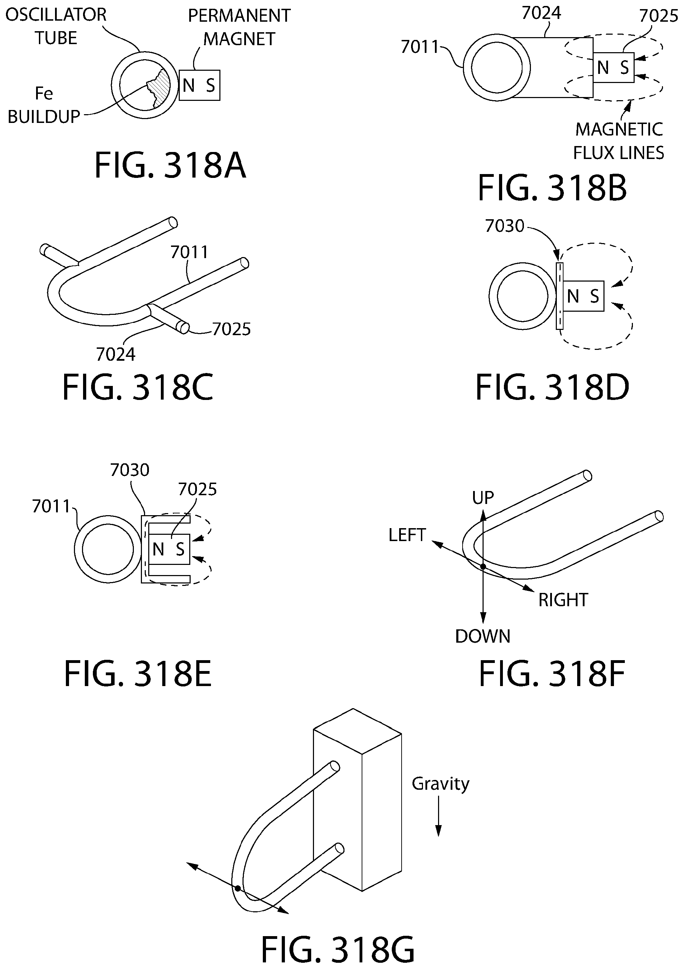

Although laboratory digital density meters having oscillator tubes are commercially available, they are not entirely compatible off the shelf for measuring soil slurries or other agricultural materials that can have a presence of varying amounts of iron (Fe) in the soil unlike other fluids. The iron in the soil slurry creates a problem which interferes with accurate soil slurry density measurement since iron particles in the slurry are attracted to the permanent magnets used in the density measurement device 7010. This causes the iron particles to aggregate on portions of the tube closest to the permanent magnets, thereby skewing the density measurement results by adversely affecting the resonant frequency of the oscillator tube when loaded with the soil slurry and excited by driver 7012. FIG. 318A shows this undesirable situation with agglomerated Fe particle in the oscillator tube.

To combat the foregoing problem when handling iron particle-containing slurries, embodiments of a density measurement device 7010 according to the present disclosure may be modified to include a variety of magnetic isolation features or members configured to magnetically isolate the permanent magnets from the oscillator tube 7011 and iron-containing slurry therein. In the embodiment of FIGS. 304-313, the permanent magnets 7025 may each be mounted to the oscillator tube 7011 by a magnetic isolation member comprising a non-magnetic standoff 7024 (also schematically shown in FIGS. 318B and 318C). The standoffs project transversely outwards from the lateral sides of oscillator tube in opposite directions and perpendicular to longitudinal centerline CA of the density measurement device 7010. Standoffs 7024 are configured with suitable dimensions or lengths to space the permanent magnets far enough away from the oscillator tube 7011 to prevent creating a static magnetic field of sufficient strength within the tube to attract and aggregate the iron particles in the soil slurry for the reasons discussed above. The magnetic field can be such that its strength is weakened to the point that allows particles to move under the force of the flow without deposition on the inside of the oscillator tube. As illustrated in FIG. 318B, the magnet flux lines (dashed) which circulate and flow from the north (N) pole of permanent magnet 7025 to the south (S) pole do not reach the oscillator tube 7011. The magnet standoffs 7024 avoid the iron agglomeration problem shown in FIG. 318A caused by direct mounting of the permanent magnets 7025 to the oscillator tube 7011.

In one embodiment where the oscillator tube 7011 is formed of a non-metallic and non-magnetic material (e.g. glass or plastic), the standoffs 7024 may be integrally formed as a monolithic unitary structural part of the tube. In other embodiments, the standoffs to which the permanent magnets are mounted may be separate discrete elements which are fixedly coupled to the oscillator tube 7011 such as via adhesives, clips, or other suitable coupling mechanical methods. Where a metallic oscillator tube is provided, the standoffs 7024 are formed of a non-metallic material (e.g. plastic or glass) attached or adhered to the oscillator tube by a suitable means (e.g. adhesives, clips, brackets, etc.).

Other possible arrangements for mounting the permanent magnets 7025 to oscillator tube 7011 and magnetic isolation members may be used which shield or guide the creating magnetic lines of flux generated by the magnets away from the tube. For example, FIG. 318D shows a permanent magnet assembly comprising a magnetic isolation member comprising metallic magnetic shield member 7030 interspersed between the permanent magnet and oscillator tube to direct the magazine flux lines (dashed) away from the oscillator tube. In the embodiment shown, the shield member 7030 is configured as a flat plate of metal. FIG. 318E shows a U-shaped or cup shaped shield member 7030 which performs similarly to FIG. 318D. Any suitable shape of metallic magnetic shield member may be used so long as the magazine flux lines are redirected to not reach and penetrate the oscillator tube 7011.

FIG. 318F illustrates that the direction of the oscillator tube 7011 excitement via placement of the frequency driver and pickup 7012, 7013 could be in the stiffest direction (e.g. left/right represented by the tube oscillation movement arrows) or in the least stiff and most flexible direction (e.g. up/down) for a horizontally oriented tube. This will affect the natural frequency of the oscillator tube significantly, which forms the baseline against which the excited tube full of slurry is compared to determine the slurry density (weight). The stiffer side-to-side excitement/movement direction of the tube will have a higher natural frequency, while the more flexible up and down direction will have a lower natural frequency. Either orientation, or different angular orientations of the oscillator tube may be used. It may further be advantageous in some embodiments to have the tube significantly stiffer in the direction of gravity (i.e. vertically) than in the loading/excitement direction (i.e. horizontal represented by the tube oscillation movement arrows) as shown in FIG. 318B to help reduce system noise which could interfere with density measurement accuracy.

The density measurement device 7010 operates to obtain density measurements from the soil slurry in a conventional manner known in the art for such U-tube type density meters. The slurry density measurements are communicated to control system 2800 (programmable controller 2820) operably coupled to the density measurement device 7010 as seen in FIGS. 303A-B. The measurements are utilized by the controller to automatically determine how much water (diluent) needs to be added to the slurry to reach a preprogrammed target water to soil or other agricultural sample material ratio depending on the type of material to be sampled and analyzed.

An exemplary method/process for preparing an agricultural sample slurry using slurry density measurement with density measurement device 7010 (density meter) and a preprogrammed closed loop control scheme implemented by controller 2820 of the control system 2800 via suitable programming instructions/control logic will now be described. This example will use soil as the sample for convenience of description, but is not limited thereto and may be used for other agricultural sample materials (e.g. plants, manure, etc.). Given an arbitrary amount of soil in the collected sample with an associated arbitrary soil moisture content based on ambient conditions in the agricultural field and soil type, the soil slurry will be diluted to reach a consistent density reading thereby ensuring repeatable analytical results.

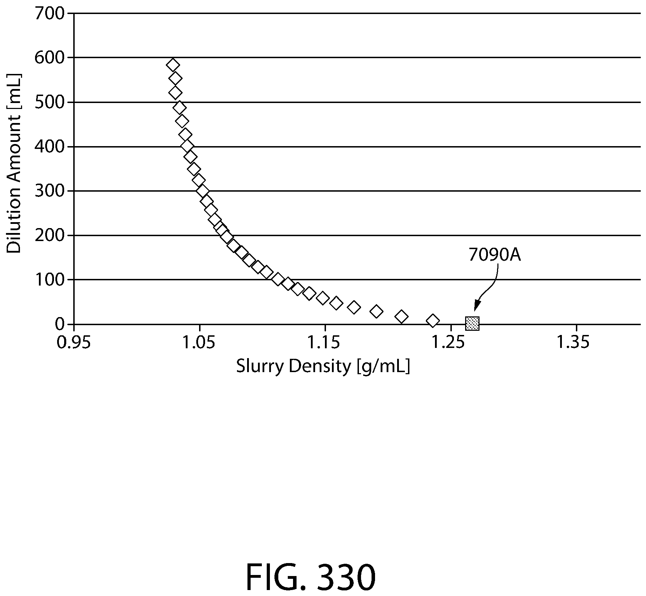

FIGS. 330-332 are curves showing dilution amount of diluent (e.g. water) added to the slurry versus slurry density which is used by controller 2820 to determine the amount of diluent required to reach the preprogrammed target water to soil ratio. The target water to soil ratio can be preprogrammed into the controller in the form of a target slurry density which can be directly equated to the ratio because the density of the diluent used is a known fixed factor. With the known density of the diluent being used (e.g. water having a density of 0.998 g/mL) also preprogrammed into the controller, as more and more diluent is added to the slurry in the system, the slurry mixture will ultimately approach the density of the diluent but can never be reversed and become less dense than this value. The relationship and curve shown in FIG. 330 is thus generated by the controller 2820 and used to reach the target slurry density (water to soil ratio). The dilution amount (Y-axis) is the total volume added to achieve the dilution. With different amounts of soil, soil moisture, and water (diluent) added to create the initial slurry mix, the slope of this curve may change but will keep the same general shape.

With additional reference to FIGS. 303A-B, the collected raw soil sample and a known amount of water are initially mixed in mixer-filter apparatus 100 a first time as indicated to prepare the slurry. Once the soil slurry has been mixed and homogenized in the mixer, a first density measurement is be sensed by the density meter and transmitted to controller 2820. Point 7090A on the curve in FIG. 330 indicates the first density measurement taken.

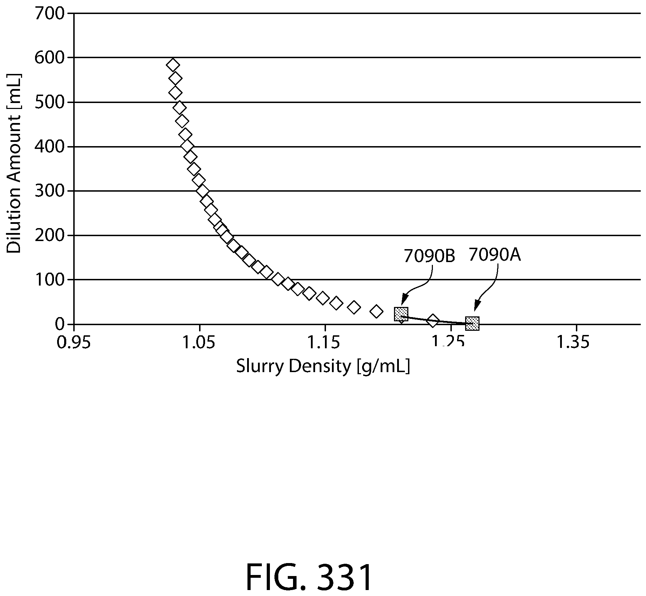

To determine the dilution amount versus slurry density relationship more precisely in real-time, a known amount of water is metered and added by controller 2820 via operably coupled water control valve 7091 to mixer-filter apparatus 100 in the next step (e.g. 20mL) and the resultant slurry density is measured a second time. Point 7090B on the curve in FIG. 331 indicates the second measurement taken. A linear relationship can then be generated by the controller between the two slurry density points 7090A and 7090B taken (represented by solid line on the curve between these two points). For a given preprogrammed target slurry density (soil to water ratio), the target density can then be input to this relationship and the output calculated by controller 2820 is a first estimation of the total amount of diluent (e.g. water) needed to achieve the target density.

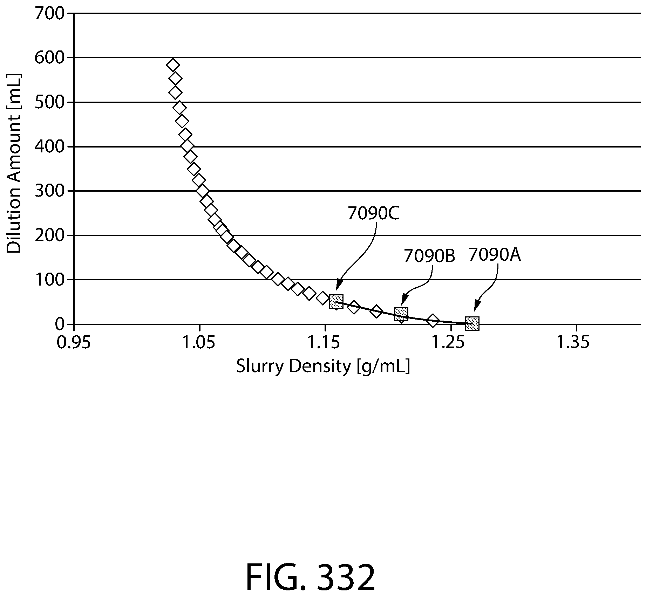

The controller 2820 next meters and adds the estimated amount of additional diluent necessary to reach the target slurry density to the slurry mixture which is mixed with the slurry by mixer-filter apparatus 100. The resultant slurry density is measured a third time. Point 7090C on the curve in FIG. 332 indicates the third measurement taken, which continues to add data points to the linear relationship (see longer solid line on curve). Once at least three slurry density measurements and corresponding points on the slurry density curve have been acquired by the controller, a polynomial regression can be performed on the data by the controller providing a more precise curve fit. Based on and using the preprogrammed target density, the controller 2820 then calculates the required total amount of diluent necessary based on the updated curves and adds this amount to the slurry to achieve the target slurry density. This process can be iterated to improve the accuracy of the regression model or until the actual density is sufficiently close to the target density

FIGS. 314-317 depict an alternative second embodiment of a cantilevered U-shaped oscillator tube 7032 for use with density measurement device 7010 which contrasts to the straight U-shaped oscillator tube 7011 previously described herein. In this present embodiment, oscillator tube 7032 has a recurvant U-tube shape in which the 180 degree primary U-bend portion 7032-3 extends backwards over top of the straight inlet end portion 7032-1 and outlet end portion 7032-2 of the oscillator tube affixed to tube mounting block 7017 and flow connection manifold 7018. This is created by the addition of two additional 180 degree secondary U-bend portions 7032-4 between the straight end portions 7032-1, 7032-2 and the primary U-bend portion 7032-3. One secondary U-bend portion 7032-4 is disposed in the slurry inlet leg of the oscillator tube upstream of primary U-bend 7032-3, and the other in the slurry outlet leg of oscillator tube downstream of the primary U-bend portion as shown. In this recurvant oscillator tube embodiment, the standoffs 7024 are disposed on the secondary U-bend portions and protrude laterally outwards in opposite lateral directions to hold the permanent magnets 7025 in spaced part relation to the oscillator tube. The frequency driver and pickup 7012, 7013 are supported from base 7014 by separate vertical supports 7031 in proximity to the permanent magnets to excite the oscillator tube 7032 as previously described herein.

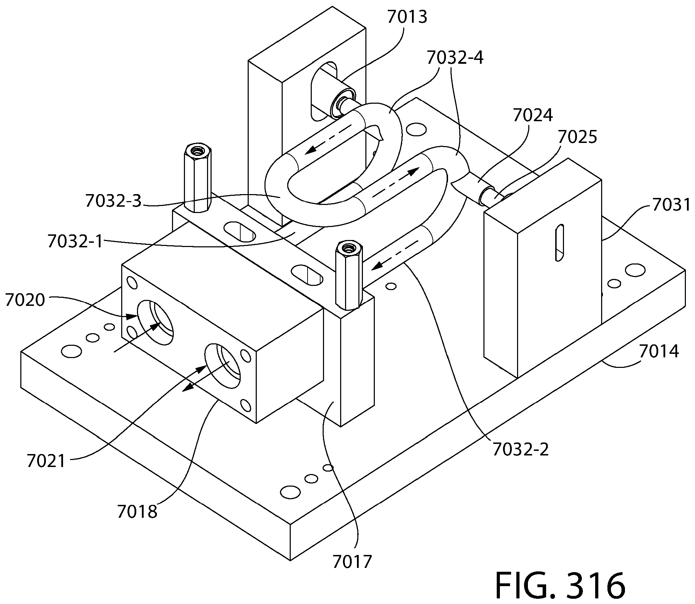

In recurvant oscillator tube 7032, slurry flow follows the path indicated by the directional flow arrows in FIG. 316. Slurry flow moves in a first direction parallel to centerline axis CA twice, and in an opposite direction parallel to centerline axis CA twice as well by virtual of the primary and secondary U-bend portions 7032-3 and 7032-4. Primary U-bend portion 7032-3 is oriented horizontal while second U-bend portions 7032-4 are oriented vertically. In this design, centerline CA and a majority of the flow passages within oscillator tube 7011 may remain horizontal in orientation as shown so that any settling that occurs is perpendicular to the flow through the passage rather than in-line with the flow.

In contrast to the first U-shaped oscillator tube 7011 of FIG. 304 first described above, the triple bend recurvant oscillator tube 7032 design is advantageous because the vibration displacement is mirrored between the left and right sides of the tube (i.e. vertical bends 7032-4 bends move towards each other, then away from each other as the tube oscillates). Due to this, there are always equal and opposite forces canceling each other out during oscillation, and thus the vibration is not affected by external influences on mass, stiffness, or damping of the base and other components. The previous straight U-tube oscillator design would propagate vibration into the base easily as the oscillation was not counterweighted, and thus the entire system vibrates somewhat. Since the entire system vibrates, any external influences on the entire systems mass, stiffness, or damping would artificially change the natural frequency, thereby adversely affecting accuracy to some degree. The straight U-tube oscillator nonetheless may be acceptable in situations not subjected to undue external influences..

The remainder of the density measurement device 7010 setup and components are essentially the same as the embodiment utilizing oscillator tube 7011 and will not be repeated here for the sake of brevity.

In some embodiments, a single device which combines the foregoing functions of both frequency transmitter or driver 7012 and receiver or pickup 7013 may be provided in lieu of separate units. Such a device may be an ultrasonic transducer as one non-limiting example. For a combined single driver-pickup device 7012/7013, the device could be activated to excited the oscillator tube 7011, stopped for a few oscillations of the oscillator tube, and then reactivated to measure the resultant oscillation frequency response of the tube. In the combined design, only a single permanent magnet 7025 is required located proximate to the driver/pickup.

### Fine Filtration Filter

The filter unit of the fine filtration sub-system 7003 shown in FIGS. 303A and 303B will now be further described. In testing, the inventors have discovered that "fine" filtering (e.g. 0.010 inches/0.254 mm) directly out of the mixer-filter apparatus can in some situations adversely and significantly affect the ability to obtain a consistent water to soil ratio (e.g. 3:1) across all types of soils which might be encountered, sampled, and tested. Accordingly, it is beneficial to understand and measure the density of the mixed raw soil sample slurry from the mixer-filter apparatus 100 before performing fine filtering. Accordingly, preferred but non-limiting embodiments of the disclosed agricultural sample analysis systems 7000 comprise both a coarse filter 146 upstream of density measurement device 7010, and a fine filter 7050 or 7060 downstream of the density measurement device; each of which is described in greater detail below. Two different exemplary configurations of the agricultural sample analysis system comprising this two-stage slurry filtering are disclosed; one with slurry recirculation from the fine filter unit back to the mixer-filter apparatus 100 shown in FIG. 303B and one without recirculation shown in FIG. 303A further discussed herein.

The agricultural sample analysis system utilizes a first coarse filter 146 having a very coarse screen (e.g. about 0.04-0.08 inch/1-2 mm maximum particle size passage in one possible implementation) to initially screen and filter out larger size stones, rocks and aggregate from the slurry to avoid clogging/plugging of the flow conduit (tubing) lines upstream of microfluidic processing disk 4000 while still permitting an accurate density measurement in density measurement device 7010. Coarse filter 146 may be incorporated into mixer-filter apparatus 100 in one embodiment as previously described herein, or may be a separate downstream unit. This coarse filtering is followed by fine filtering in fine filter units 7050 or 7060 having fine screening (e.g. less than 0.04 inch/1mm, such as about .010 inch/0.25 mm maximum particle size passage in one possible implementation) to allow the agricultural slurry sample to pass through the microfluidic flow network and components of the analysis processing wedges 4002 of microfluidic processing disk 4000 shown in FIGS. 96-121 without causing flow obstructions/plugging. For soil, these extremely small particles passed by the fine filter unit make up the vast majority of the nutrient content of the soil, so it is acceptable to use finely filtered slurry for the ultimate chemical analysis in the system. It bears noting that the fine filtering step and filter units 7050, 7060 are useable and applicable to slurries comprised of other agricultural materials to be sampled (e.g. vegetation, manure, etc.) and thus not limited to soil slurries alone.

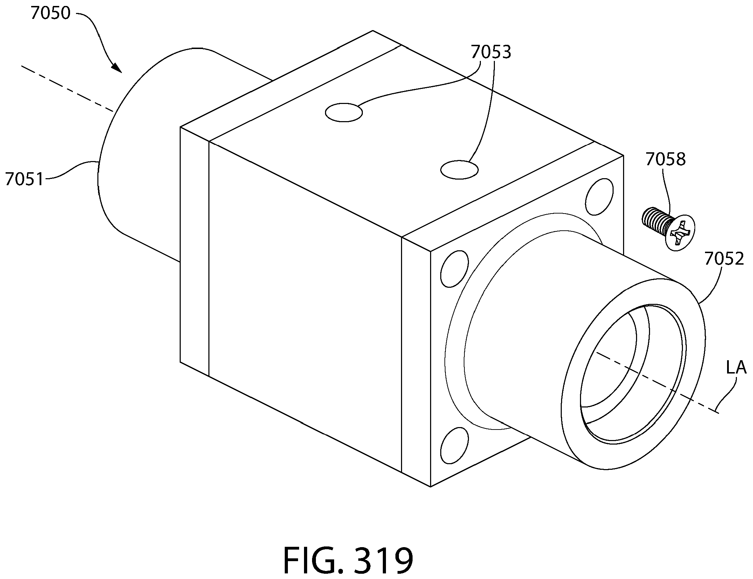

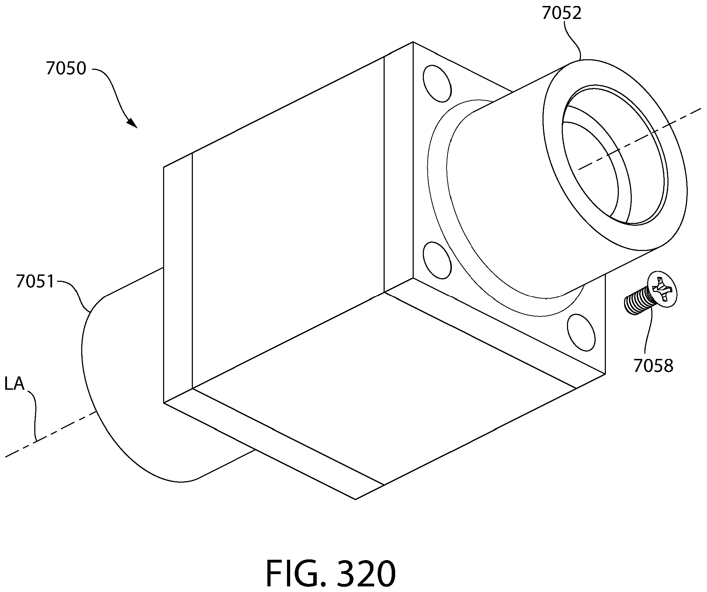

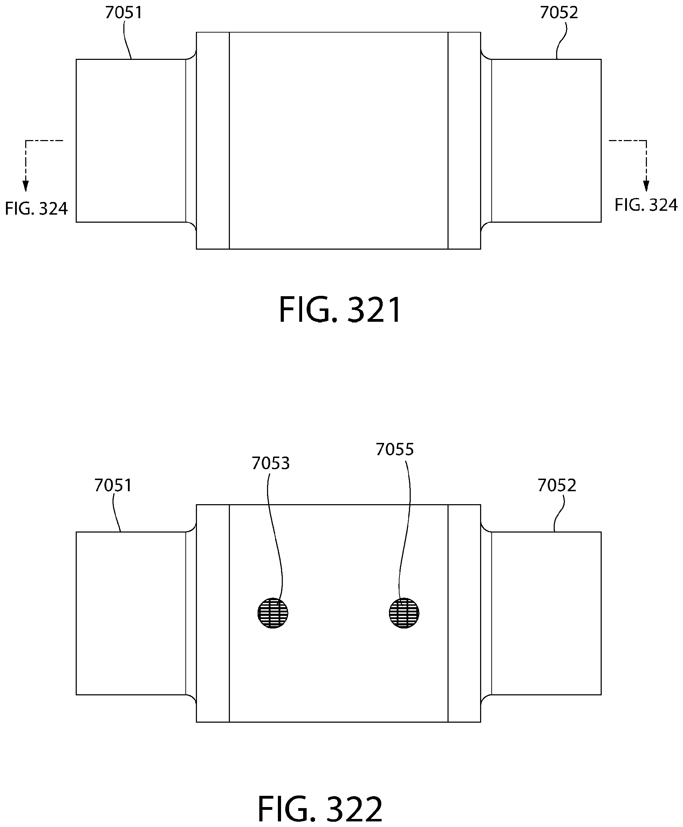

FIGS. 319-323 show a first embodiment of a fine filter unit 7050 useable with either of the soil slurry preparation and analysis systems shown in FIGS. 303A-B. Fine filter unit 7050 is configured for particular use with the slurry recirculation setup of FIG. 303B which includes a closed recirculation flow loop 7059 between the fine filter unit 7050 (or 7060) and mixer-filter apparatus 100 as shown.

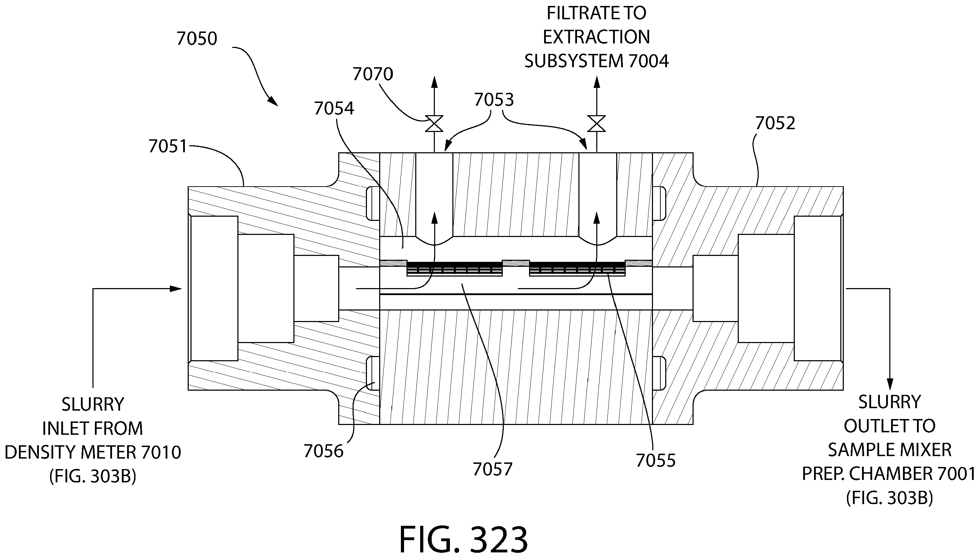

Filter unit 7050 comprises a longitudinal axis LA, pre-filtered slurry inlet nozzle 7051, pre-filtered slurry outlet nozzle 7052, plural filtrate outlets 7053 (post-filtered), internal pre-filtered slurry chamber 7057, internal filtrate chamber 7054, and one or more filter members such as screens 7055 arranged between the chambers. Screens 7055 may be arcuately shaped in one embodiment and positioned at the top of the slurry chamber 7057 as best shown in FIG. 323. Any number of screens may be provided. A pair of annular seals 7056 fluidly seals the inlet and outlet nozzles 7051, 7052 to the main body of the filter unit to allow initial placement of the filter screen 7055 inside the filter unit before securing the inlet and outlet nozzles to the body. The main body may be block-shaped, cylindrical, or another shape. The nozzles may be uncoupled from the central main filter body in order to access the interior of the filter unit and initially install or periodically replace the screens. Threaded fasteners 7058 or other suitable coupling means may be used to couple the inlet and outlet nozzles to the opposing ends of the main body. The slurry inlet and outlet nozzles 7051, 7052 may have any suitable configuration in order to accept any suitable type of tubing connector to fluidly couple the system slurry tubing 7088 to the filter 7050. One non-limiting example of tubing connector that could be used is John Guest plastic half cartridge connector which is commercially-available. Other tubing connectors may be used. Any suitable non-metallic (e.g. plastic) or metallic materials may be used to construct filter unit 7050 including screens 7055. In one embodiment, the main body of the filter unit may be plastic and the screens 7055 may be metallic such as gridded mesh defining mesh openings.

In operation and describing the slurry flow path through fine filter unit 7050 with respect to FIG. 303B, unfiltered slurry flows in sequence (upstream to downstream) from the coarse filter 146 through density measurement device 7010 and enters the fine filter unit through the inlet nozzle 7051. The slurry flows axially and linearly through pre-filtered slurry chamber 7057, and then exits the filter through outlet nozzle 7052 back to mixer-filter apparatus 100 (see, e.g. "sample prep. chamber" in FIG. 303B). A slurry recirculation pump 7080 may be provided to fluidly drive the recirculation flow in the closed recirculation flow loop 7059 and return the yet to be fine filtered slurry back to the mixer-filter apparatus. Any suitable type of slurry pump may be used. The recirculation pump may be omitted in some embodiments if the main slurry pump 7081 provides sufficient fluid power to drive the slurry flow through the entire closed recirculation flow loop 7059. The system continuously recirculates the coarsely filtered slurry back into the main blending chamber of the mixer for a period of time. This recirculation can advantageously help with getting a homogeneous slurry mixture more quickly for analysis than with the mixer alone by continuously recycling the slurry through the mixer and coarse filter in the closed recirculation flow loop 7059. During density measurement, water is automatically metered and added to the mixer-filter apparatus 100 by the previously described control system 2800 (including programmable controller 2820) based on the system monitoring the slurry density measured by density measurement device 7010, which is operably coupled to the controller in order to achieve the preprogrammed water to soil ratio. The slurry is better mixed by this continuous slurry recirculation.

Once a coarsely filtered homogeneous slurry having the desired water to soil ratio is achieved, a small minority portion of the recirculating slurry stream may be bypassed and extracted from fine filter unit 7050 for initial processing in analyte extraction sub-system 7004 and subsequent chemical analysis (see, e.g. FIG. 303B). The extracted slurry flows transversely through filter screens 7055 and into filtrate chamber 7054, and then outwards through the filtrate outlets 7053 to the analyte extraction sub-system. The flow of extracted slurry may be controlled by suitable control valves 7070 changeable in position between open full flow, closed no flow, and throttled partially open flows therebetween if needed. Valves 7070 may be manually operated or automatically operated by controller 2820 to open at an appropriate time once homogenous slurry having the desired water to soil ratio has been achieved, or as otherwise preprogrammed. Additional valves may also be used to open flow to water in order to backflush the filter during the cleaning cycle in preparation for the next sample.

Although two filtrate outlets 7053 are shown in FIGS. 319-323, other embodiments may have more than two filtrate outlets or less (i.e. one outlet). Each filtrate outlet 7053 is fluidly coupled to and supplies fine filtered slurry (filtrate) to a separate one of the dedicated soil sample slurry processing and analysis trains or systems previously described herein (e.g. analysis processing wedges 4002 shown in FIGS. 96-121 or another); each train fluidly isolated from others and configured for quantifying the concentration of a different analyte of interest (e.g. plant nutrients such as nitrogen, phosphorus, potassium, etc.) in parallel.

It bears noting that the term "pre-filtered" used above only refers to the fact that the soil slurry has not been filtered yet with respect to the fine filter unit 7050 being presently described. However, the slurry may have undergone previous filtering or screen upstream however such as in coarse filter 146 seen in FIGS. 303A-B. Accordingly, the slurry may be filtered before reaching fine filter unit 7050 downstream.

Fine filter unit 7050 is configured to eliminate the passage of soil or other particles in the slurry which cause blockages in or otherwise obstruct the extremely small diameter microfluidic flow passages/conduits and microfluidic processing disk flow components such as valves, pumps, and chambers formed within the analysis processing wedges 4002 of microfluidic processing disk 4000 shown in FIGS. 96-121 and previously described herein. Accordingly, filter screens 7055 of fine filter unit 7050 are sized to pass soil particles compatible with the microfluidic processing disk and smaller in size than those screened out by the upstream coarse filter 146 associated with the mixer-filter apparatus. The filter screens 7055 have a plurality of openings each configured to remove particles greater than a predetermined size from the slurry to yield the filtrate. Screens 7055 may be formed of a grid-like metallic mesh in one embodiment which defines the mesh openings for filtering the slurry.

Accordingly in one preferred embodiment, the first coarse filter 146 of the system is configured to pass slurry having a first maximum particle size, and the second fine filter unit 7050 is configured to pass slurry having a second maximum particle size smaller than the first maximum particle size. Furthermore, the ultrafine filtration sub-system 7005 which comprises the third ultrafine filter 5757 (which may be incorporated into or associated with microfluidic processing disk 4000 or associated with soil sampling system 3000) is configured to pass slurry having a third maximum size smaller than the first and second maximum particle sizes. As previously described herein, the ultrafine filter 5757 is micro-porous filter which can replace the centrifuge 3400 and is configured to produce the clear filtrate from the soil slurry and extractant mixture which serves as the supernatant for chemical analysis. Accordingly, the performance of ultrafine filter 575 surpasses both the coarse and fine filters in terms of the smallest maximum passable particle size. As a non-limiting example, representative pore sizes that may be used for ultrafine filter 575 is about and including 0.05µm to 1.00µm. It bears noting that the foregoing terms "first," "second,", and "third" are used to connote the filter units which the slurry encounters in sequence flowing from upstream to downstream when passing through the systems shown in FIGS. 303A-B. Accordingly, the maximum slurry particle size continuously gets smaller as the slurry passes through each filter unit in sequence.

**In** an ordinary filter operation, all flow is directed through the screen and anything that does not pass through the screen stops on the screen and builds up. This requires the screen to be either drained or back-flushed after a period of time to keep it clean and functional for its purpose. This presents a problem if a lot of particulate material needs to be filtered out because it will lead to a very short time period for which the filter will work before needing cleaning. For this reason, the new screen fine filter units 7050, 7060 were designed which operate on the principle of extracting a small amount soil slurry for testing from the main slurry recirculation flow path as described above instead of intercepting all of the slurry flow for fine filtering. Doing this advantageously enables the filter to stay clean for a much longer period of time because only a minority portion of the slurry flow is extracted and travels through the screen transversely to the main direction of the slurry flow through the filter unit. In addition, the main slurry flow path which preferably is oriented parallel to the plane occupied by the screen 7055 continually scrubs and cleans the filter screens 7055 (see, e.g. FIGS. 3223) by shearing action of the flow to prevent accumulation of particles on the screens. It further bears noting that the fine filter units 7050 and 7060 advantageously avoids internal areas that have low pressure or flow where particulates can accumulate. It is also desirable to avoid internal surface orientations in the filter in which particulates will accumulate due to gravity. Accordingly, embodiments of fine filter units 7050, 7060 preferably may be oriented such that the filter screens 7055, 7065 respectively are above the main flow and juncture where the bypass slurry flow is drawn off for chemical analysis and preferably in a transverse direction to the main flow path of slurry through the filter bodies (see, e.g. FIGS. 323 and 238).

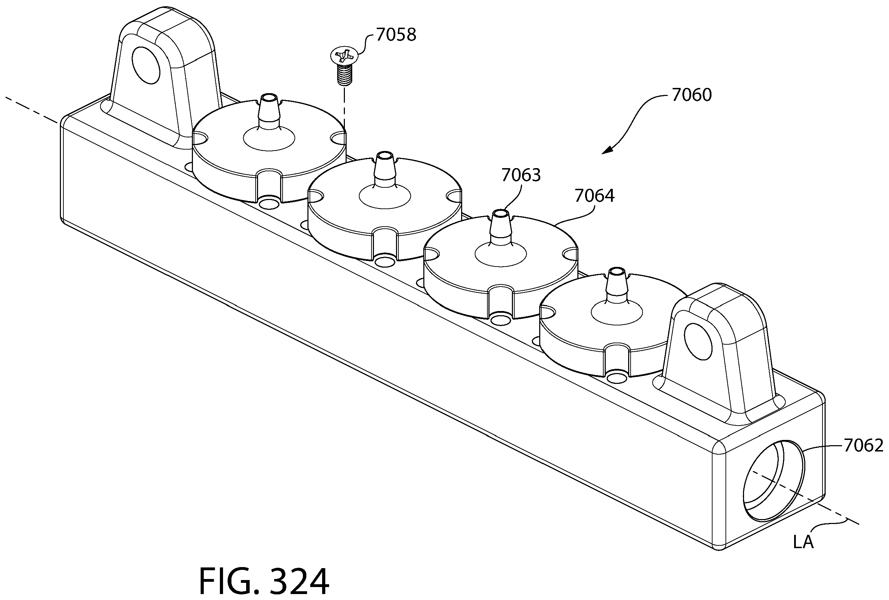

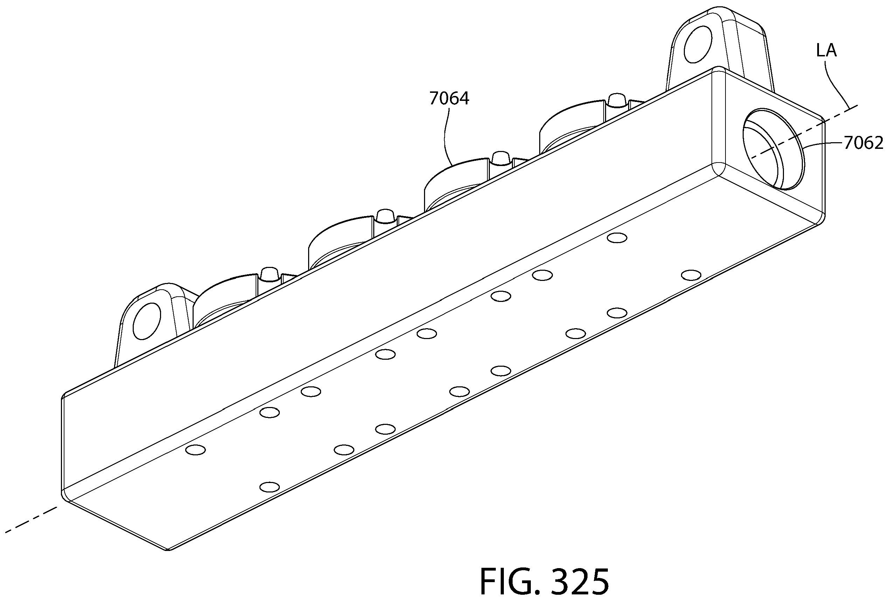

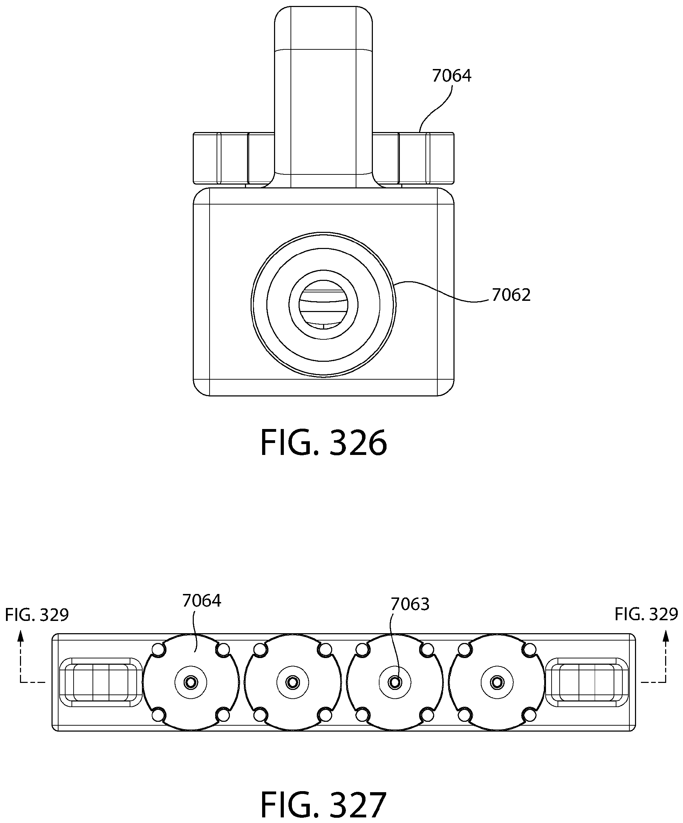

FIGS. 324-328 shows the second embodiment of a fine filter unit 7060 noted above. Fine filter unit 7060 comprises a plurality of optionally replaceable filter screen assemblies or units 7068. In this embodiment by contrast to fine filter unit 7050, the filter screen units can be removed and replaced without breaking the end fluid connections to the system tubing/piping, thereby greatly facilitating periodic changeout of the screens over time. Filter unit 7050 has internally mounted screens 7055, which can be accessed by removing the slurry inlet and outlets nozzles 7051, 7052 as previously described herein. In some embodiments, filter screen units 7068 may be constructed to be disposable such that a new screen unit is interchanged with the used plugged screen units when needed.

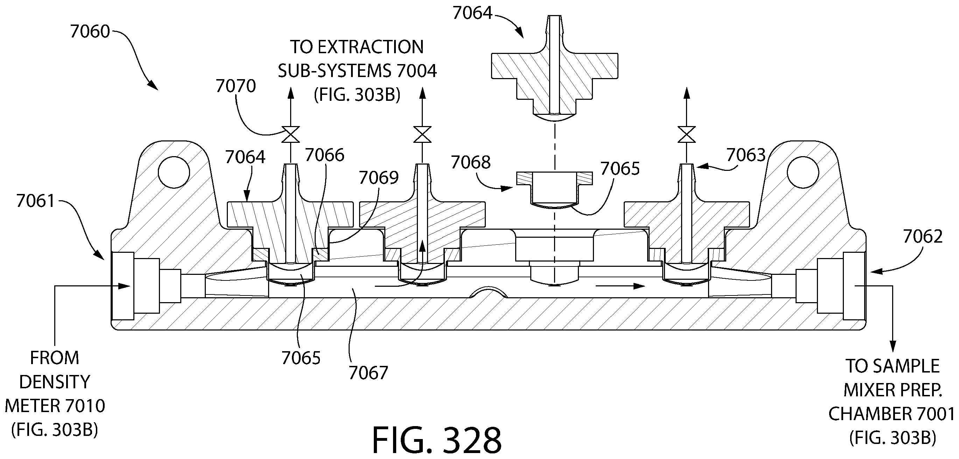

Fine filter unit 7060 has an axially elongated main body which defines a longitudinal axis LA, a pre-filtered slurry inlet 7061, pre-filtered slurry recirculation outlet 7062, plural filtrate outlets 7063 (post-filtered), internal pre-filtered main slurry chamber 7067 in fluid communication with the inlet and outlet, and plurality of filter screen units 7068 each comprising a filter member such as screen 7065 arranged between the chamber 7067 and one filtrate outlet 7063. Inlet 7061 and outlet 7062 may preferably be located at opposite ends of the fine filter unit body at each end of chamber 7067, thereby allowing the main slurry chamber to define a slurry distribution manifold in fluid communication with each filtrate outlet 7063. Screens 7065 may be convexly curved and dome shaped in some embodiments (best shown in FIG. 328). The main slurry chamber 7067 extends axially between the inlet and outlets 7061, 7062 beneath the screen units 7068. Fine filter unit 7060, albeit convexly shaped, may be used in the orientation shown such that portions of the screens 7065 exposed to the slurry in main slurry chamber 7067 may be considered substantially horizontally oriented and parallel to longitudinal axis LA and the axial flow of slurry through the main slurry chamber screens. Flow through the screens is further in an upward direction (transverse to longitudinal axis LA and the axial slurry flow in the chamber) when the fine filter unit 7060 is used in the preferred horizontal position. This combines to advantageously both: (1) scrub and clean the screens 7065 as the slurry flows past the screens in the slurry chamber 7067 thereby preventing accumulation of slurry particles on the screens until the filtrate is extracted, and (2) counteracts the affects of gravity for accumulating particulate on the screens since the slurry enters the screens from the bottom thereby keeping the particles below the screens until filtrate extraction occurs.

Fine filter unit 7060 is axially elongated such that the screen units 7068 may be arranged in a single longitudinal array or row as shown so that the main slurry chamber 7067 is linearly straight to avoid creation of internal dead flow and lower pressure areas in the slurry flow path where particulate in the slurry might accumulate.

An annular seal 7066 which may be elastomeric washers in one embodiment may be incorporated directly into each filter screen unit 7068 as part of the assembly to fluidly seal the screen unit to the main body of the filter unit. Screen unit 7068 may have a cup-shaped configuration in one embodiment (best shown in FIG. 328) with the convexly curved dome-shaped screen 7065 protruding outwards/downwards from one side of the seal 7066 into the main slurry chamber 7067. Each screen unit 7068 is received in a complementary configured upwardly open receptacle 7069 formed in the main body of the filter unit 7060 which fluidly communicates with the main slurry chamber 7067 of the filter unit. A screen retainer 7064 may be detachably coupled to the filter unit main body and received at least partially in each receptacle to retain each screen unit as best shown in FIG. 328. The main body may be block-shaped, cylindrical, or another shape. The filtrate outlets 7063 may an integral unitary structural portion of the screen retainers 7064 in one embodiment, and can be terminated with a conventional tubing barb in some embodiments as shown to facilitate coupling to the flow conduit tubing of the system. Other type fluid end connections may be used. Filtrate outlets 7063 extend completely through the retainers from top to bottom (segment. FIG. 328). Retainers 7064 may have a generally stepped-shape cylindrical configuration in some embodiments. Threaded fasteners 7058 or other suitable coupling means may be used to removably couple the retainers 7064 to the main body of the filter unit. The retainers 7064 trap the filter screen units 7068 in the receptacles 7069. Any suitable non-metallic (e.g. plastic) or metallic materials may be used to construct filter unit 7060 including screens 7065. In one embodiment, the main body of the filter unit may be plastic and screens 7065 may be metallic.

Similarly to filter unit 7050 and screens 7055, the screen units 7068 have screens 7065 each configured to remove particles greater than a predetermined size from the slurry to produce the filtrate. The filter screens 7065 thus have a plurality of openings each configured to pass slurry having a predetermined maximum particle size. Screens 7065 may be formed of a grid-like metallic mesh in one embodiment which defines the mesh openings for filtering the slurry. Other embodiments of screens 7065 or 7055 may use polymeric meshes. Other type filter media may be used in other possible embodiments to perform the desired slurry screening.

An exemplary process for exchanging filter screen units 7068 includes removing the threaded fasteners 7058, withdrawing the retainers 7064 from each receptacle 7069 transversely to the longitudinal axis LA of the filter unit main body, withdrawing the filter screen units transversely, inserting new screen units transversely to the longitudinal axis LA into each receptacle, re-inserting the retainers into the receptacles, and reinstalling the fasteners.

An overview of one non-limiting method for preparing an agricultural sample slurry using the slurry recirculation and dual filtering generally comprises steps of: mixing an agricultural sample with water in a mixing device to prepare a slurry; filtering the slurry a first time; measuring a density of the slurry; recirculating the slurry back to the mixing device; and extracting a portion of the recirculating slurry through a secondary fine filter to obtain a final filtrate. Filtering the slurry the first time passes slurry comprising particles having a first maximum particle size, and filtering the slurry the second time passes slurry comprising particles having a second maximum particle size smaller than the first maximum particle size. The final filtrate then flows to any of the agricultural sample analysis systems discloses herein which are configured to further process and measure an analyte in the slurry.

It bears noting that both fine filter units 7050 and 7060 may be used with the agricultural sample analysis system of FIG. 303A without slurry recirculation by simply closing the respective recirculation outlet nozzles via a plug or a closed valve fluidly coupled to the outlet nozzle. Alternatively, the slurry could flow to waste after passing through the fine filter. In this case, the filtrate would need to be extracted from the slurry while it is flowing through the filter.

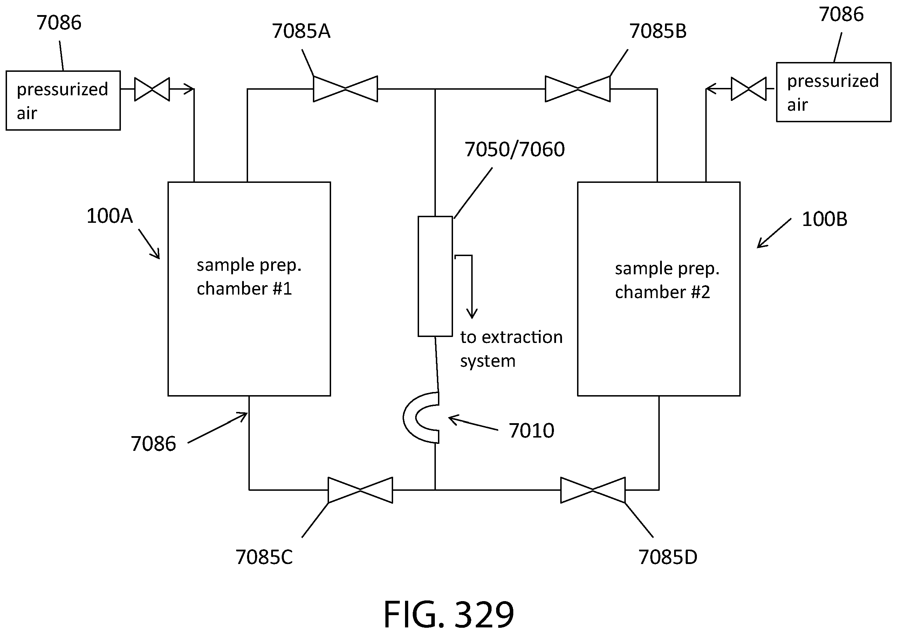

In lieu of the pump recirculation system of FIG. 303B, FIG. 329 is a schematic diagonal showing an alternative equipment layout and method for recirculating the coarsely filtered slurry through fine filter units 7050 or 7060 using pressurized air instead. Two blending chambers are fluidly coupled to the inlet and outlet of a fine filter unit 7050 or 7060 as shown by the flow conduit network layout which may be piping or tubing 7086 shown. At least one of the blending chambers may be provided by mixer-filter apparatus 100A for initially preparing the water and soil slurry. The other blending chamber may be an additional mixer-filter apparatus 100B, or alternatively simply an empty pressure vessel. Four slurry valves 7085A, 7085B, 7085C, and 7085D are fluidly arranged between the fine filter unit and each of the chambers as shown for controlling the direct of the slurry during blending. In operation, if the slurry is first prepared in mixer-filter apparatus 100A (sample prep. chamber #1), valves 7085B and 7085C are opened, and valves 7085A and 7085D are closed. Mixer-filter apparatus 100A is pressurized with air from valved pressurized air source 7086 which causes the slurry to flow through density measurement device 7010 and the fine filter unit 7050 or 7060 to mixer-filter apparatus 100B. Valves 7085B and 7085C are then closed, and valves 7085A and 7085D are opened. Mixer-filter apparatus 100B is then pressurized causing the slurry to flow in a reverse direction through fine filter unit 7050 or 7060 and density measurement device 7010 back to mixer-filter apparatus 100A. The sequence cycle is repeated multiple times to continue the slurry blending. The valving and pressurized air sources may be operably coupled to and controlled by system controller 2820 pressure, which may be programmed to cause this back and forth flow to occur very rapidly. The slurry density may be measured continuously each time the slurry flows through the density meter. Once the slurry is thoroughly blended as desired, the filtrate outlets from the fine filter units are opened to direct the filtered slurry to the extraction sub-system 7004 shown in FIG. 303B for processing and chemical analysis. In some embodiments, a single pressurized air source may be used for each mixing chamber in lieu of separate sources. In another embodiment, the second chamber could be mounted directly above the first sample preparation chamber with a valve between. Instead of pressurizing the second chamber, gravity would allow the slurry to flow back down into the first chamber.

### System Slurry Flow Conduit Sizing

The internal diameter (ID) of the slurry flow conduit such as slurry tubing 7088 shown in FIGS. 303A-B is critical to proper operation of the agricultural sample analysis systems 7000 without plugging the tubing. When moving slurry with large particles through a small tube, the likelihood of clogging increases. For nearly laminar flow, the velocity at the wall is near zero which exacerbates the problem. For small tubing, this becomes significant because of high frictional forces on the slurry. If these frictional forces become too significant, particles fall out of the flow and build up in the tubing causing a flow stoppage. Additionally, large particles can wedge with other large particles in a small tube and cause blockages and flow stoppage. However, having very large tubing is problematic because it is difficult to have sufficient flow to keep particles in suspension to prevent soil particle precipitates.

The inventors have discovered that the internal diameter of the slurry tubing 7088 and passages should be designed in such a way that the internal cross sectional diameter is at a minimum two times the largest particle size in the slurry. That is, as an example, if the particles are screened to 2mm in size (e.g. diameter) by the coarse filter 146 or fine filter units 7050 or 7060, the ID of the tubing should be no less than 4mm diameter. Conversely, the internal diameter of tubing and passages should be designed in such a way that the cross sectional internal diameter is at most ten times the largest particle size (e.g. diameter). That is, as an example, if the particles are screened to 2mm in size, the ID of the tubing should be no greater than 20mm in diameter. Accordingly, the preferred internal diameter of the slurry tubing 7088 has a critical range between at least two times the largest particle size/diameter and no greater than ten times the largest particle size/diameter.

In some embodiments, the tubing material used may preferably be flexible and formed of a fluoropolymer, such as without limitation FEP (fluorinated ethylene propylene) in one non-limiting example. Other fluoropolymers such as PTFE (polytetrafluoroethylene), ETFE (polyethylenetetrafluoroethylene), and PFA (perfluoroalkoxy polymer resin). The dynamic coefficient of friction (DCOF) associated with these fluoropolymers also affects the preferred range of tubing internal diameter discussed above because the tubing material creates frictional resistance to slurry flow. FEP, PTFE, ETFE, and PFA each have a DCOF falling the range between about and including 0.02 - 0.4 as measured per ASTM D1894 test protocol. Accordingly, the tubing material used for slurry tubing 7088 associated with the above critical tubing internal diameter range preferably also has a DCOF in the range between about and including 0.02 - 0.4, and more particularly 0.08 - 0.3 associated with FEP in some embodiments. Testing performed by the inventors confirmed that use of FEP tubing falling within the critical internal tubing diameter range avoided the slurry flow blockage problems noted above. In other possible embodiments, nylon tubing may be used.

## Claims

1. An agricultural sample analysis system (7000) comprising:
a mixing device (100) fluidly coupled to a water source, the mixing device (100) operable to mix water and a sample to prepare a slurry;
a density measurement device (7002, 7010) fluidly coupled to the mixing device (100), the density measurement device (7002, 7010) arranged to receive the slurry and configured to measure a density of the slurry,
**characterized in that**
the density measurement device (7002, 7010) is a digital density meter of the oscillator type comprising a microprocessor-based controller (7016-2) and a U-shaped oscillator tube (7011) fillable with the slurry, the controller (7016-2) configured to measure a density of the slurry in the oscillator tube (7011),
wherein the density measurement device (7010) further comprises a frequency driver (7012) configured to vibrationally excite the oscillator tube (7011), and a pickup (7013) configured to measure a vibrational frequency of the oscillator tube (7011) when excited,
wherein the controller (7016-2) is configured to measure and compare a preprogrammed natural baseline frequency of the oscillator tube (7011) when empty with a measured frequency when filled with the slurry to determine the density of the slurry.

2. The system (7000) according to claim 1, wherein the oscillator tube (7011) has a recurvant U-shape comprising a primary U-bend portion (7032-3) and a pair of secondary U-bend portions (7032-4).

3. The system (7000) according to claim 2, wherein the primary U-bend portion (7032-3) is positioned above a straight inlet portion (7032-1) and a straight outlet portion (7032-2) of the oscillator tube (7011).

4. The system (7000) according to claim 2, wherein the oscillator tube (7011) is formed of a non-metallic material or a metallic material.

5. The system (7000) according to claim 1, further comprising a first permanent magnet (7025) coupled to the oscillator tube (7011) on a first side of the oscillator tube (7011) proximate to the driver (7012) and a U-bend portion (7011-3) of the oscillator tube (7011), and a second permanent magnet (7025) coupled to the oscillator tube (7011) on an opposite second side of the oscillator tube (7011) proximate to the pickup (7013) and a U-bend portion (7011-3) of the oscillator tube (7011).

6. The system (7000) according to claim 1, wherein the driver (7012) is selected from the group consisting of an electromagnetic inductor, a piezoelectric device, and a mechanical pulse generator all of which are operable to generate a user-controllable excitation frequency.

7. The system (7000) according to claim 3, further comprising a magnetic isolation member (7024, 7030) interposed between and attached to each of the first and second permanent magnets (7025) and the oscillator tube (7011), the magnetic isolation members (7024, 7030) each attached to the oscillator tube (7011) and configured to isolate a magnetic field produced by the permanent magnets (7025) from the oscillator tube (7011).

8. The system (7000) according to claim 7, wherein the magnetic isolation member comprises:
a non-metallic standoff (7024), each standoff having a first end coupled to the oscillator tube (7011) and a second end coupled to its respective first or second permanent magnet (7025); or
a metallic shield member (7030) configured to direct the magnetic field produced by the permanent magnets (7025) away from the oscillator tube (7011) such that magnetic lines of flux produced by the permanent magnets (7025) do not penetrate the oscillator tube (7011).

9. The system (7000) according to claim 1 further comprising:
a first coarse filter (146) fluidly coupled to the mixing device, the coarse filter (146) configured to pass slurry having a first maximum particle size;
the density measurement device (7002, 7010) fluidly coupled to the coarse filter (146); and
a second fine filter (7003, 7050, 7060) fluidly coupled to the density measurement device (7002, 7010), the fine filter (7003, 7050, 7060) configured to pass slurry having a second maximum particle size smaller than the first maximum particle size,
wherein the coarse filter (146) is optionally mounted to the density measurement device (7002, 7010).

10. The system (7000) according to claim 9, further comprising a third ultrafine filter (5757) fluidly coupled to the fine filter (7003, 7050, 7060), the ultrafine filter (5757) configured to pass slurry having a third maximum size smaller than the first and second maximum particle sizes.

11. The system (7000) according to claim 9, further comprising:
a closed recirculation flow loop (7059) formed between an outlet from the fine filter (7003) and the density measurement device (7002, 7010), the flow loop (7059) configured to recirculate the slurry back to the density measurement device (7002, 7010); and
a slurry recirculation pump (7080) fluidly coupled between the fine filter (7003, 7050, 7060) and the density measurement device (7002, 7010) which drives flow through the closed recirculation flow loop (7059),
wherein the recirculation flow loop (7059) is operable to continuously circulate the slurry between the fine filter (7003, 7050, 7060) and the density measurement device (7002, 7010),
wherein the density measurement device (7002, 7010) is configured to measure the slurry density dynamically while the slurry flows therethrough.

12. The system (7000) according to claim 9, wherein the fine filter (7003, 7050, 7060) comprises:
a plurality of filter screen units (7055) arranged in a single common housing;
an inlet slurry chamber (7057) fluidly coupled to each filter screen unit (7055) which distributes the slurry to each filter unit (7055), wherein each filter screen unit (7055) comprises a discrete filtrate outlet (7053) fluidly isolated from every other filtrate outlet (7053), wherein the filter screen units (7055) are arranged in a longitudinal linear array in the common housing.

13. A method for preparing an agricultural slurry sample by the agricultural sample analysis system (7000) according to any one of the claims 1 to 12, comprising:
mixing an agricultural sample with water in the mixing device to prepare a slurry;
filtering the slurry a first time;
measuring a density of the slurry;
recirculating the slurry back to the mixing device;
adding a known amount of dilution water to the slurry in the mixing device;
measuring the density of the slurry a second time; and
extracting a portion of the recirculating slurry through a secondary fine filter.

14. The method according to claim 13, further comprising:
flowing the final filtrate to an agricultural sample analysis system (7000) configured to measure an analyte in the slurry; and
in the agricultural sample analysis system (7000) steps of adding an extractant to the final filtrate, and filtering the final filtrate and extractant mixture to yield a substantially clear supernatant.

15. The method according to claim 13, wherein filtering the slurry the first time passes slurry comprising particles having a first maximum particle size, and filtering the slurry the second time passes slurry comprising particles having a second maximum particle size smaller than the first maximum particle size.

## Patentansprüche

1. Analysesystem (7000) für landwirtschaftliche Proben, das Folgendes umfasst:
eine Mischvorrichtung (100), die mit einer Wasserquelle strömungsgekoppelt ist, wobei die Mischvorrichtung (100) dahingehend betreibbar ist, Wasser und eine Probe unter Zubereitung einer Aufschlämmung zu vermischen;
eine Dichtemessvorrichtung (7002, 7010), die mit der Mischvorrichtung (100) strömungsgekoppelt ist, wobei die Dichtemessvorrichtung (7002, 7010) dahingehend angeordnet ist, die Aufschlämmung aufzunehmen, und dazu konfiguriert ist, eine Dichte der Aufschlämmung zu messen,
**dadurch gekennzeichnet, dass**
die Dichtemessvorrichtung (7002, 7010) ein digitaler Dichtemesser basierend auf dem Schwingungsprinzip ist, der eine mikroprozessorbasierte Steuerung (7016-2) und ein U-förmiges Schwingrohr (7011), das mit der Aufschlämmung füllbar ist, umfasst, wobei die Steuerung (7016-2) dazu konfiguriert ist, eine Dichte der Aufschlämmung in dem Schwingrohr (7011) zu messen,
wobei die Dichtemessvorrichtung (7010) ferner einen Frequenzerreger (7012), der dazu konfiguriert ist, das Schwingrohr (7011) zur Schwingung anzuregen, und einen Aufnehmer (7013), der dazu konfiguriert ist, eine Schwingungsfrequenz des Schwingrohrs (7011) zu messen, wenn es angeregt ist, umfasst,
wobei die Steuerung (7016-2) dazu konfiguriert ist, eine vorprogrammierte Baseline-Eigenfrequenz des Schwingrohrs (7011) im leeren Zustand zu messen und mit einer gemessenen Frequenz, wenn es mit der Aufschlämmung gefüllt ist, zu vergleichen, um die Dichte der Aufschlämmung zu bestimmen.

2. System (7000) nach Anspruch 1, wobei das Schwingrohr (7011) eine zurückgebogene U-Form aufweist, die einen primären U-Biegung-Abschnitt (7032-3) und ein Paar sekundärer U-Biegung-Abschnitte (7032-4) umfasst.

3. System (7000) nach Anspruch 2, wobei der primäre U-Biegung-Abschnitt (7032-3) über einem geraden Einlassabschnitt (7032-1) und einem geraden Auslassabschnitt (7032-2) des Schwingrohrs (7011) positioniert ist.

4. System (7000) nach Anspruch 2, wobei das Schwingrohr (7011) aus einem nichtmetallischen Material oder einem metallischen Material gebildet ist.

5. System (7000) nach Anspruch 1, das ferner einen ersten Dauermagneten (7025), der mit dem Schwingrohr (7011) auf einer ersten Seite des Schwingrohrs (7011) in der Nähe des Erregers (7012)und einem U-Biegung-Abschnitt (7011-3) des Schwingrohrs (7011) gekoppelt ist, und einen zweiten Dauermagneten (7025), der mit dem Schwingrohr (7011) auf einer gegenüberliegenden zweiten Seite des Schwingrohrs (7011) in der Nähe des Aufnehmers (7013) und einem U-Biegung-Abschnitt (7011-3) des Schwingrohrs (7011) gekoppelt ist, umfasst.

6. System (7000) nach Anspruch 1, wobei der Erreger (7012) aus der Gruppe ausgewählt ist, die aus einem elektromagnetischen Induktor, einer piezoelektrischen Vorrichtung und einem mechanischen Impulsgenerator besteht, die alle dahingehend betreibbar sind, eine vom Benutzer steuerbare Anregungsfrequenz zu erzeugen.

7. System (7000) nach Anspruch 3, das ferner ein magnetisches Isolationsglied (7024, 7030) umfasst, das zwischen dem ersten und dem zweiten Dauermagneten (7025) und dem Schwingrohr (7011) angeordnet und daran befestigt ist, wobei die magnetischen Isolationsglieder (7024, 7030) jeweils an dem Schwingrohr (7011) angebracht und dazu konfiguriert sind, ein Magnetfeld, das durch die Dauermagnete (7025) erzeugt wird, von dem Schwingrohr (7011) zu isolieren.

8. System (7000) nach Anspruch 7, wobei das magnetische Isolationsglied Folgendes umfasst:
einen nichtmetallischen Abstandshalter (7024), wobei jeder Abstandshalter ein erstes Ende, das mit dem Schwingrohr (7011) gekoppelt ist, und ein zweites Ende, das mit seinem jeweiligen ersten oder zweiten Dauermagneten (7025) gekoppelt ist, aufweist; oder
ein metallisches Abschirmelement (7030), das dazu konfiguriert ist, das von den Dauermagneten (7025) erzeugte Magnetfeld von dem Schwingrohr (7011) weg zu richten, so dass magnetische Flusslinien, die von den Dauermagneten (7025) erzeugt werden, das Schwingrohr (7011) nicht durchdringen.

9. System (7000) nach Anspruch 1, das ferner Folgendes umfasst:
einen ersten Grobfilter (146), der mit der Mischvorrichtung strömungsgekoppelt ist, wobei der Grobfilter (146) dazu konfiguriert ist, Aufschlämmung mit einer ersten maximalen Partikelgröße durchzulassen;
die Dichtemessvorrichtung (7002, 7010), die mit dem Grobfilter (146) strömungsgekoppelt ist; und
einen zweiten Feinfilter (7003, 7050, 7060), der mit der Dichtemessvorrichtung (7002, 7010) strömungsgekoppelt ist, wobei der Feinfilter (7003, 7050, 7060) dazu konfiguriert ist, Aufschlämmung mit einer zweiten maximalen Partikelgröße, die kleiner als die erste maximale Partikelgröße ist, durchzulassen,
wobei der Grobfilter (146) optional an der Dichtemessvorrichtung (7002, 7010) befestigt ist.

10. System (7000) nach Anspruch 9, das ferner einen dritten Ultrafeinfilter (5757) umfasst, der mit dem Feinfilter (7003, 7050, 7060) strömungsgekoppelt ist, wobei der Ultrafeinfilter (5757) dazu konfiguriert ist, Aufschlämmung mit einer dritten maximalen Größe, die kleiner als die erste und die zweite maximale Partikelgröße ist, durchzulassen.

11. System (7000) nach Anspruch 9, das ferner Folgendes umfasst:
einen geschlossenen Rückführungsströmungskreislauf (7059), der zwischen einem Auslass von dem Feinfilter (7003) und der Dichtemessvorrichtung (7002, 7010) ausgebildet ist, wobei der Strömungskreislauf (7059) dazu konfiguriert ist, die Aufschlämmung zurück zu der Dichtemessvorrichtung (7002, 7010) zurückzuführen; und
eine Aufschlämmungsrückführungspumpe (7080), die zwischen dem Feinfilter (7003, 7050, 7060) und der Dichtemessvorrichtung (7002, 7010) strömungsgekoppelt ist, die das Strömen durch den geschlossenen Rückführungsströmungskreislauf (7059) antreibt,
wobei der Rückführungsströmungskreislauf (7059) dahingehend betreibbar ist, die Aufschlämmung kontinuierlich zwischen dem Feinfilter (7003, 7050, 7060) und der Dichtemessvorrichtung (7002, 7010) zirkulieren zu lassen,
wobei die Dichtemessvorrichtung (7002, 7010) dazu konfiguriert ist, die Aufschlämmungsdichte dynamisch zu messen, während die Aufschlämmung dort hindurchströmt.

12. System (7000) nach Anspruch 9, wobei der Feinfilter (7003, 7050, 7060) Folgendes umfasst:
mehrere Filtersiebeinheiten (7055), die in einem einzigen gemeinsamen Gehäuse angeordnet sind;
eine Aufschlämmungseinlasskammer (7057), die mit jeder Filtersiebeinheit (7055) strömungsgekoppelt ist, die die Aufschlämmung auf jede Filtereinheit (7055) verteilt, wobei jede Filtersiebeinheit (7055) einen diskreten Filtratauslass (7053) umfasst, der strömungstechnisch von jedem anderen Filtratauslass (7053) isoliert ist, wobei die Filtersiebeinheiten (7055) in einer linearen Längsanordnung in dem gemeinsamen Gehäuse angeordnet sind.

13. Verfahren zum Herstellen einer landwirtschaftlichen Aufschlämmungsprobe mit dem Analysesystem (7000) für landwirtschaftliche Proben nach einem der Ansprüche 1 bis 12, das Folgendes umfasst:
Mischen einer landwirtschaftlichen Probe mit Wasser in der Mischvorrichtung, um eine Aufschlämmung herzustellen;
Filtrieren der Aufschlämmung ein erstes Mal;
Messen einer Dichte der Aufschlämmung;
Zurückführen der Aufschlämmung zu der Mischvorrichtung;
Hinzufügen einer bekannten Menge Verdünnungswasser zu der Aufschlämmung in der Mischvorrichtung;
Messen der Dichte der Aufschlämmung ein zweites Mal; und
Extrahieren eines Teils der zurückgeführten Aufschlämmung durch einen sekundären Feinfilter.

14. Verfahren nach Anspruch 13, das ferner Folgendes umfasst:
Leiten des Endfiltrats zu einem Analysesystem (7000) für landwirtschaftliche Proben, das dazu konfiguriert ist, einen Analyt in der Aufschlämmung zu messen; und
in dem Analysesystem (7000) für landwirtschaftliche Proben, Schritte des Zugebens eines Extraktionsmittels zu dem Endfiltrat und des Filtrierens des Gemischs aus Endfiltrat und Extraktionsmittel zum Erhalten eines im Wesentlichen klaren Überstands.

15. Verfahren nach Anspruch 13, wobei beim Filtrieren der Aufschlämmung zum ersten Mal Aufschlämmung, die Partikel mit einer ersten maximalen Partikelgröße umfasst, durchgelassen wird und beim Filtrieren der Aufschlämmung zum zweiten Mal Aufschlämmung, die Partikel mit einer zweiten maximalen Partikelgröße, die kleiner als die erste maximale Partikelgröße ist, umfasst, durchgelassen wird.

## Revendications

1. Système d'analyse d'échantillon agricole (7000), comprenant :
un dispositif de mélangeage (100) couplé fluidiquement à une source d'eau, le dispositif de mélangeage (100) étant utilisable pour mélanger de l'eau et un échantillon pour préparer une suspension ;
un dispositif de mesure de densité (7002, 7010) couplé fluidiquement au dispositif de mélangeage (100), le dispositif de mesure de densité (7002, 7010) étant agencé pour recevoir la suspension et configuré pour mesurer une densité de la suspension,
**caractérisé en ce que**
le dispositif de mesure de densité (7002, 7010) est un densimètre numérique du type oscillateur comprenant une appareil de commande à base de microprocesseur (7016-2) et un tube oscillateur en forme de U (7011) remplissable avec la suspension, l'appareil de commande (7016-2) étant configuré pour mesurer une densité de la suspension dans le tube oscillateur (7011),
dans lequel le dispositif de mesure de densité (7010) comprend en outre un conducteur de fréquence (7012) configuré pour exciter de façon vibratoire le tube oscillateur (7011), et un capteur (7013) configuré pour mesurer une fréquence de vibration du tube oscillateur (7011) lorsqu'il est excité,
dans lequel l'appareil de commande (7016-2) est configuré pour mesurer et comparer une fréquence de base naturelle préprogrammée du tube oscillateur (7011) lorsqu'il est vide à une fréquence mesurée lorsqu'il est rempli avec la suspension pour déterminer la densité de la suspension.

2. Système (7000) selon la revendication 1, dans lequel le tube oscillateur (7011) a une forme de U recourbée comprenant une partie cambrée en U primaire (7032-3) et une paire de parties cambrées en U secondaires (7032-4).

3. Système (7000) selon la revendication 2, dans lequel la partie cambrée en U primaire (7032-3) est positionnée au-dessus d'une partie d'entrée droite (7032-1) et une partie de sortie droite (7032-2) du tube oscillateur (7011).

4. Système (7000) selon la revendication 2, dans lequel le tube oscillateur (7011) est formé d'un matériau non métallique ou d'un matériau métallique.

5. Système (7000) selon la revendication 1, comprenant en outre un premier aimant permanent (7025) couplé au tube oscillateur (7011) sur un premier côté du tube oscillateur (7011) à proximité du conducteur (7012) et à une partie cambrée en U (7011-3) du tube oscillateur (7011), et un second aimant permanent (7025) couplé au tube oscillateur (7011) sur un second côté opposé du tube oscillateur (7011) à proximité du capteur (7013) et à une partie cambrée en U (7011-3) du tube oscillateur (7011).

6. Système (7000) selon la revendication 1, dans lequel le conducteur (7012) est sélectionné parmi le groupe constitué d'un inducteur électromagnétique, d'un dispositif piézoélectrique, et d'un générateur d'impulsion mécanique dont tous sont utilisables pour générer une fréquence d'excitation commandable par utilisateur.

7. Système (7000) selon la revendication 3, comprenant en outre un élément d'isolation magnétique (7024, 7030) interposé entre chacun des premier et second aimants permanents (7025) et le tube oscillateur (7011), et attaché à ceux-ci, les éléments d'isolation magnétique (7024, 7030) étant, chacun, attachés au tube oscillateur (7011) et configurés pour isoler, du tube oscillateur (7011), un champ magnétique produit par les aimants permanents (7025).

8. Système (7000) selon la revendication 7, dans lequel l'élément d'isolation magnétique comprend :
une pièce d'écartement non métallique (7024), chaque pièce d'écartement ayant une première extrémité couplée au tube oscillateur (7011) et une seconde extrémité couplée à son premier ou second aimant permanent respectif (7025) ; ou
un élément de protection métallique (7030) configuré pour diriger le champ magnétique, produit par les aimants permanents (7025), dans une direction à l'opposé du tube oscillateur (7011) de manière telle que des lignes magnétiques de flux produites par les aimants permanents (7025) ne pénètrent pas dans le tube oscillateur (7011).

9. Système (7000) selon la revendication 1 comprenant en outre :
un premier filtre grossier (146) couplé fluidiquement au dispositif de mélangeage, le filtre grossier (146) étant configuré pour faire passer une suspension ayant une première taille maximum des particules ;
le dispositif de mesure de densité (7002, 7010) couplé fluidiquement au filtre grossier (146) ; et
un deuxième filtre fin (7003, 7050, 7060) couplé fluidiquement au dispositif de mesure de densité (7002, 7010), le filtre fin (7003, 7050, 7060) étant configuré pour faire passer une suspension ayant une deuxième taille maximum des particules plus petite que la première taille maximum des particules,
dans lequel le filtre grossier (146) est facultativement monté sur le dispositif de mesure de densité (7002, 7010).

10. Système (7000) selon la revendication 9, comprenant en outre un troisième filtre ultrafin (5757) couplé fluidiquement au filtre fin (7003, 7050, 7060), le filtre ultrafin (5757) étant configuré pour faire passer une suspension ayant une troisième taille maximum plus petite que les première et deuxième tailles maximums des particules.

11. Système (7000) selon la revendication 9, comprenant en outre :
une boucle d'écoulement de recirculation fermée (7059) formée entre une sortie du filtre fin (7003) et le dispositif de mesure de densité (7002, 7010), la boucle d'écoulement (7059) étant configurée pour effectuer la recirculation de la suspension en retour jusqu'au dispositif de mesure de densité (7002, 7010) ; et
une pompe de recirculation de suspension (7080) fluidiquement couplée entre le filtre fin (7003, 7050, 7060) et le dispositif de mesure de densité (7002, 7010) qui entraîne un écoulement à travers la boucle d'écoulement de recirculation fermée (7059),
dans lequel la boucle d'écoulement de recirculation (7059) est utilisable pour faire circuler en continu la suspension entre le filtre fin (7003, 7050, 7060) et le dispositif de mesure de densité (7002, 7010), dans lequel le dispositif de mesure de densité (7002, 7010) est configuré pour mesurer la densité de suspension dynamiquement alors que la suspension s'écoule à travers celui-ci.

12. Système (7000) selon la revendication 9, dans lequel le filtre fin (7003, 7050, 7060) comprend :
une pluralité d'unités tamis de filtre (7055) agencées dans un seul boîtier commun ;
une chambre de suspension d'entrée (7057) couplée fluidiquement à chaque unité tamis de filtre (7055) qui distribue la suspension à chaque unité de filtre (7055), dans lequel chaque unité tamis de filtre (7055) comprend une sortie de filtrat distincte (7053) fluidiquement isolée de chaque autre sortie de filtrat (7053), dans lequel les unités tamis de filtre (7055) sont agencées en un réseau linéaire longitudinal dans le boîtier commun.

13. Procédé pour préparer un échantillon de suspension agricole par le système d'analyse d'échantillon agricole (7000) selon l'une quelconque des revendications 1 à 12, comprenant :
le mélangeage d'un échantillon agricole avec de l'eau dans le dispositif de mélangeage pour préparer une suspension ;
la filtration de la suspension une première fois ;
la mesure d'une densité de la suspension ;
la recirculation de la suspension de retour jusqu'au dispositif de mélangeage ;
l'ajout d'une quantité connue d'eau de dilution à la suspension dans le dispositif de mélangeage ;
la mesure de la densité de la suspension une seconde fois ; et
l'extraction d'une partie de la suspension de recirculation à travers un filtre fin secondaire.

14. Procédé selon la revendication 13, comprenant en outre :
l'écoulement du filtrat final jusqu'à un système d'analyse d'échantillon agricole (7000) configuré pour mesurer un analyte dans la suspension ; et
dans le système d'analyse d'échantillon agricole (7000), des étapes de l'ajout d'un extractant au filtrat final, et de la filtration du mélange de filtrat final et d'extractant pour produire un surnageant sensiblement transparent.

15. Procédé selon la revendication 13, dans lequel la filtration de la suspension la première fois fait passer une suspension comprenant des particules ayant une première taille maximum des particules, et la filtration de la suspension la seconde fois fait passer une suspension comprenant des particules ayant une deuxième taille maximum des particules plus petite que la première taille maximum des particules.
